(19) Europäisches Patentamt
European Patent Office
Office européen des brevets

(11) **EP 1 795 632 A1**

(12) **EUROPEAN PATENT APPLICATION**
published in accordance with Art. 158(3) EPC

(43) Date of publication:
**13.06.2007 Bulletin 2007/24**

(51) Int Cl.:
*D01F 6/80* (2006.01)   *D01F 6/90* (2006.01)
*D01F 8/12* (2006.01)   *D21H 13/26* (2006.01)
*D21H 15/10* (2006.01)   *H01M 2/16* (2006.01)

(21) Application number: **05783626.4**

(22) Date of filing: **15.09.2005**

(86) International application number:
**PCT/JP2005/017073**

(87) International publication number:
**WO 2006/035614 (06.04.2006 Gazette 2006/14)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **27.09.2004 JP 2004278884**

(71) Applicant: **KURARAY CO., LTD.**
**Kurashiki-shi, Okayama 710-8622 (JP)**

(72) Inventors:
 • **KATAYAMA, Takashi,**
  **c/o KURARAY CO., LTD.**
  **Kurashiki-shi,**
  **Okayama 710-8622 (JP)**

 • **UCHIDA, Koichi,**
  **c/o KURARAY CO., LTD.**
  **Kurashiki-shi,**
  **Okayama 710-0801 (JP)**
 • **OMAE, Yoshinobu,**
  **c/o KURARAY CO., LTD.**
  **Okayama-shi,**
  **Okayama 702-8601 (JP)**

(74) Representative: **Vossius & Partner**
 **Siebertstrasse 4**
 **81675 München (DE)**

(54) **BINDER FIBER AND SEPARATOR FOR ALKALINE CELL USING SAME**

(57) A binder fiber comprising a polyamide component in at least part of a surface thereof is prepared. The polyamide component contains a senini-aromatic polyamide at least having an aromatic ring unit and a $C_{3-7}$ alkane unit which may have a branched $C_{1-3}$ alkyl chain. In the binder fiber, the polyamide component may be (a) a semi-aromatic copolyamide having an aromatic ring unit, a $C_{3-7}$ alkane unit which may have a branched $C_{1-3}$ alkyl chain, and a $C_{8-12}$ alkane unit which may have a branched $C_{1-3}$ alkyl chain. The polyamide component may be (d) a combination of (b) a semi-aromatic polyamide and (c) a semi-aromatic polyamide, wherein the polyamide (b) has an aromatic ring unit and a $C_{3-7}$ alkane unit which may have a branched $C_{1-3}$ alkyl chain, and the polyamide (c) has an aromatic ring unit and a $C_{8-12}$ alkane unit which may have a branched $C_{1-3}$ alkyl chain.

EP 1 795 632 A1

**Description**

TECHNICAL FIELD

The present invention relates to a binder fiber and a battery separator using the same, and specifically relates to a separator for an alkaline battery such as an alkaline manganese battery, a silver battery, an air battery, a nickel-cadmium storage battery, a nickel metal-hydride storage battery, a silver oxide-zinc storage battery, a nickel-zinc storage battery or anickel-iron storage battery (particularly a separator for an alkaline secondary battery used under a high rate) and a binder fiber suitable for the separator.

BACKGROUND ART

An alkaline secondary battery such as a nickel-cadmium storage battery or a nickel metal-hydride storage battery is excellent in high rate discharge characteristics, and has been widely used as a power source for a power tool such as a cordless machine tool accordingly. A separator suitable for such a battery is usually in the form of a paper or nonwoven fabric. As a fiber constituting the paper or nonwoven fabric, various fibers have been proposed.

For example, Japanese Patent Application Laid-Open No. 259856/1997 (JP-9-259856A, Patent Document 1) discloses a battery separator formed from a nonwoven fabric comprising as a main component a semi-aromatic polyamide which is obtained from a dicarboxylic acid component containing not less than 60% by mole of an aromatic carboxylic acid (e.g., terephthalic acid) and a diamine component containing not less than 60% by mole of an alkanediamine having 6 to 12 carbon atoms (e.g., 1,9-nonanediamine, 2-methyl-1,8-octanediamine). Moreover, Japanese Patent Application Laid-Open No. 103459/2004 (JP-2004-103459A, Patent Document 2) discloses an alkaline battery separator comprising such a semi-aromatic polyamide-series fiber and a specific cellulose fiber as main fibers, in which the specific cellulose fiber is produced by using a spinning stock solution containing a cellulose dissolved in a nonreactive solvent.

Although the paper or nonwoven fabric to be used for a separator usually comprises a main fiber and a binder fiber, these inventions described in the above documents absolutely relate to the improvement of a main fiber and not a binder fiber. Further, main fibers concretely disclosed in Examples or others of these documents are high in crystallinity and melting point, and have no binder ability at all.

The paper or nonwoven fabric to be used as a battery separator is, as mentioned above, usually a product comprising the binder fiber and the main fiber, and the product is obtained by fixing the main fiber by melting, softening or dissolving the binder fiber and solidifying the resulting matter. Conventionally, the main effort of research and development has been exclusively put into the improvement in the performance of the main fiber, and almost all of the known art try to improve the performance of the battery separator by improving the main fiber. However, even if an extremely high-performance main fiber is used, the performance of the main fiber cannot be displayed as expected in the case of using an inferior binder fiber in combination with the main fiber. The reason is as follows: in the case where the binder fiber is inferior in performance, the performance of the battery separator depends on the binder fiber, and the battery separator loses the action or function before displaying the high performance of the main fiber. Heretofore, as the binder fiber for the battery separator, there have been used a thermoplastic fiber having a melting point lower than that of a polymer constituting a main fiber, a fiber comprising polymer which is melted by heating under a wet condition, a sheath-core structure conjugated fiber containing these polymers as a sheath component, or others.

For example, in the Patent Document 2, as the binder fiber, exemplified is a polyvinyl alcohol-series fiber, an ethylene-vinyl alcohol-series fiber, a polyethylene fiber, a polyamide fiber, a vinyl chloride-vinyl acetate copolymer fiber and others. Among them, the document mentions that a polyvinyl alcohol-series fiber solving in hot water or an ethylene-vinyl alcohol copolymer fiber is preferred. Further, usually, a polyethylene fiber or a polyamide fiber is widely employed as the binder fiber, and a polymer constituting the polyamide-series binder fiber is an aliphatic polyamide such as polyamide 6 or a polyamide 612. Moreover, for example, Japanese Patent Application Laid-Open No. 110390/2001 (JP-2001-110390A, Patent Document 3) discloses an olefinic binder fiber formed from a core component comprising a polypropylene-series resin and a sheath component comprising a polyethylene-series resin.

However, a binder fiber comprising an aliphatic polyamide such as a polyamide 6 is oxidized and degraded due to heat generated in charge and discharge and repetition of oxidation-reduction by charge and discharge, and such a degraded binder fiber rapidly deteriorates in the binder effect as well as induces the self-discharge. Moreover, a binder fiber comprising a polyethylene is also low in heat resistance, and is sometimes melted by heat generated in rapid charge and discharge. Further, a polyvinyl alcohol-series fiber is also melted by heat generated in charge and discharge and oxidized and degraded resulting in self-discharge.

Furthermore, in the case of producing a separator by a wet paper production process, the prime need as the binder fiber is to express sufficient adhesivity as the temporary adhesion (or provisional adhesion) of the binder fiber on the occasion of drying the binder fiber in a wet condition in the process of producing a separator paper and thereby ensure enough paper-productivity, and then to express a strong binder strength under a heating condition after the drying. However, in the conventional binder fiber, such a binder strength as temporary adhesivity (or provisional adhesivity) and the above-mentioned heat deterioration resistance (hereinafter, which is sometimes simply referred to as "heat resistance") or resistance to oxidization and degradation (hereinafter, which is sometimes simply referred to as "oxidation resistance") cannot be compatible with each other.

[Patent Document 1] JP-9-259856A (Claims 1 to 3, and Examples)
[Patent Document 2] JP-2004-103459A (Claims 1 and 2, and Examples)
[Patent Document 3] JP-2001-110390A (Claims 1 and 2)

DISCLOSURE OF THE INVENTION

PROBLEMS TO BE SOLVED BY THE INVENTION

It is therefore an object of the present invention to provide a binder fiber having a high resistance to oxidization and degradation at a high temperature, and a battery separator using the same.

It is another object of the present invention to provide a binder fiber excellent in electrolyte resistance (or alkali resistance) and heat resistance at a high temperature, and a battery separator using the same.

It is still another object of the present invention to provide a binder fiber excellent in workability in the case of producing a nonwoven fabric from a main fiber in combination through a wet paper production process, and a battery separator using the same.

MEANS TO SOLVE THE PROBLEMS

The inventors of the present invention made intensive studies to achieve the above objects and finally found that, in the case where at least part of a surface of a fiber comprises a polyamide component containing a semi-aromatic polyamide at least having an aromatic ring unit and a $C_{3-7}$alkane unit which may have a branched alkyl chain, the fiber has high resistance to oxidization and degradation and high electrolyte resistance (alkali resistance) at a high temperature, and is excellent in heat resistance and adhesiveness. The present invention was accomplished based on the above findings.

That is, the binder fiber of the present invention comprises a polyamide component in at least part of a surface of the fiber (or a polyamide component forming at least part of a surface of the fiber), wherein the polyamide component contains a semi-aromatic polyamide at least having an aromatic ring unit and a $C_{3-7}$alkane unit which may have a $C_{1-3}$alkyl group as a branched chain.

The polyamide component may comprise (a) a semi-aromatic copolyamide having an aromatic ring unit, a $C_{3-7}$alkane unit which may have a $C_{1-3}$alkyl group as a branched chain, and a $C_{8-12}$alkane unit which may have a $C_{1-3}$alkyl group as a branched chain. Among others, the polyamide component may comprise a semi-aromatic copolyamide having a dicarboxylic acid unit containing an aromatic dicarboxylic acid unit in a proportion of not less than 60% by mole relative to the total dicarboxylic acid unit; and a diamine unit containing a $C_{4-7}$alkanediamine unit which may have methyl group as a branched chain and a $C_{8-10}$alkanediamine unit which may have methyl group as a branched chain, wherein the total proportion of the $C_{4-7}$alkanediamine unit and the $C_{8-10}$alkanediamine unit is not less than 60% by mole relative to the total diamine unit. For example, the polyamide component may comprise a semi-aromatic copolyamide comprising the following dicarboxylic acid unit (1) and the following diamine unit (2):

(1) a dicarboxylic acid unit containing at least one first dicarboxylic acid unit selected from the group consisting of a terephthalic acid unit and an isophthalic acid unit, wherein the proportion of the first dicarboxylic acid unit is not less than 60% by mole relative to the total dicarboxylic acid unit,
(2) a diamine unit containing at least one first diamine unit selected from the group consisting of a 2,2,4-trimethylhexanediamine unit, a 2,4,4-trimethylhexanediamine unit and a 1,6-hexanediamine unit and at least one second diamine unit selected from the group consisting of a 1,9-nonanediamine unit and a 2-methyl-1,8-octanediamine unit, wherein the total proportion of the first diamine unit and the second diamine unit is not less than 60% by mole relative to the total diamine unit.

The polyamide component may comprise (d) a combination of (b) a semi-aromatic polyamide and (c) a semi-aromatic polyamide, wherein the semi-aromatic polyamide (b) has an aromatic ring unit and a $C_{3-7}$alkane unit which may have a $C_{1-3}$alkyl group as a branched chain, and the semi-aromatic polyamide (c) has an aromatic ring unit and a $C_{8-12}$alkane unit which may have a $C_{1-3}$alkyl group as a branched chain. Among others, the polyamide component may comprise a combination of the following semi-aromatic polyamides:

a semi-aromatic polyamide having

a dicarboxylic acid unit containing an aromatic dicarboxylic acid unit in a proportion of not less than 60% by mole relative to the total dicarboxylic acid unit, and

a diamine unit containing a $C_{4-7}$alkanediamine unit which may have methyl group as a branched chain, wherein the proportion of the $C_{4-7}$alkanediamine unit is not less than 60% by mole relative to the total diamine unit; and

a semi-aromatic polyamide having

a dicarboxylic acid unit containing an aromatic dicarboxylic acid unit in a proportion of not less than 60% by mole relative to the total dicarboxylic acid unit, and

a diamine unit containing a $C_{8-10}$alkanediamine unit which may have methyl group as a branched chain, wherein the proportion of the $C_{8-10}$alkanediamine unit is not less than 60% by mole relative to the total diamine unit.

For example, the polyamide component may comprise a combination of a semi-aromatic polyamide comprising the dicarboxylic acid unit (1) and the following diamine unit (3), and a semi-aromatic polyamide comprising the following dicarboxylic acid unit (4) and the following diamine unit (5).

(3) a diamine unit containing at least one first diamine unit selected from the group consisting of a 2,2,4-trimethylhexanediamine unit, a 2,4,4-trimethylhexanediamine unit and a 1,6-hexanediamine unit, wherein the proportion of the first diamine unit is not less than 60% by mole relative to the total diamine unit,
(4) a dicarboxylic acid unit containing a terephthalic acid unit in a proportion of not less than 60% by mole relative to the total dicarboxylic acid unit,
(5) a diamine unit containing at least one second diamine unit selected from the group consisting of a 1,9-nonanedtamine unit and a 2-methyl-1,8-octanediamine unit, wherein the proportion of the second diamine unit is not less than 60% by mole relative to the total diamine unit.

Further, the binder fiber of the present invention may be a sheath-core structure conjugated (or composite) fiber, and the sheath may comprise a polyamide component which contains a semi-aromatic polyamide having an aromatic ring unit and a $C_{3-7}$alkane unit which may have a $C_{1-3}$alkyl group as a branched chain. In the sheath-core structure conjugated fiber, the sheath may comprise the semi-aromatic polyamide (a), or the combination (d) of the semi-aromatic polyamide (b) and the semi-aromatic polyamide (c), and the core may comprise the semi-aromatic polyamide (c).
The present invention also includes a battery separator comprising a main fiber and the binder fiber. In the separator, the main fiber may be fixed in the form of a sheet by the semi-aromatic polyamide of the binder fiber as an adhesive. The main fiber may comprise a polyamide-series resin (for example, a semi-aromatic polyamide synthesized from 1,9-nonanediamine, 2-methyl-1,8-octanediamine and terephthalic acid). In the separator, for example, at least the surface of the binder fiber may comprise the semi-aromatic polyamide (a), or the combination (d) of the semi-aromatic polyamide (b) and the semi-aromatic polyamide (c); and the main fiber may comprise the semi-aromatic polyamide (c). The separator may further contain as a reinforcing fiber a high-tenacity fiber having a tensile strength of not less than 12 cN/dtex (e.g., a polyparaphenylenebenzobisoxazole fiber, a polyparapheneyleneterephthalamide fiber and/or a high-tenacity polyvinyl alcohol-series fiber, particularly a polyparaphenylenebenzobisoxazole fiber) or a pulp-like material thereof. The battery separator of the present invention may be a wet-laid nonwoven fabric. The battery separator may satisfy the following requirements (1) to (3):
(1) the breaking length of the separator is not shorter than 3 km,
(2) the separator retains the shape as a separator after being immersed in an alkali at 140°C for 30 minutes, the weight retention of the separator after the immersion is not less than 90% compared with the weight of the separator before the immersion, and the strength retention of the separator after the immersion is not less than 60% compared with the strength of the separator before the immersion,
(3) the separator retains the shape as a separator after being immersed in an alkali containing an oxidant at 50°C for 1 hour, the weight retention of the separator after the Immersion is not less than 90% compared with the weight of the separator before the immersion, and the strength retention of the separator is not less than 60% compared with the strength of the separator before the immersion.

Further, the present invention also includes a battery comprising the separator.

EFFECTS OF THE INVENTION

The binder fiber of the present invention has high resistance to oxidization and degradation and alkali resistance (electrolyte resistance) at a high temperature (under a high heat condition), and additionally is excellent in heat resistance. Further, the binder fiber of the present invention is high in adhesivity. Even in the case of producing a nonwoven fabric by using the binder fiber and a main fiber in combination through a wet paper production process, the binder fiber can express enough binder strength even by temporary adhesion. Therefore, the use of the binder fiber ensures excellent workability (for example, workability or process passability in the case of incorporating a separator into a battery). Additionally, for example, in the case of using the binder fiber of the present invention as a binder fiber for paper, the binder fiber enhances the tensile strength of the paper and ensures to obtain a paper excellent in the process passability of paper production. The strength of thus obtained paper can be dramatically improved by heat press treatment. Further, the binder fiber of the present invention has such properties as mentioned above, and can be preferably used as a binder fiber for a fiber product which is exposed to high temperature or strong chemicals. Furthermore, the binder fiber of the present invention can be sufficiently proof against heat generated in charge and discharge, and further has a high resistance to oxidization and degradation and a high electrolyte resistance under a high heat condition generated in charge and discharge. Accordingly, the binder fiber is suitable as a binder fiber for a battery separator. In particular, since the alkaline battery separator comprising the binder fiber of the present invention is excellent in both electrolyte leakage resistance and high rate discharge characteristics, the binder fiber is suitable as a binder fiber of a separator for an alkaline battery in which large current discharge and high capacitance are required.

DETAILED DESCRIPTION OF THE INVENTION

In the binder fiber of the present invention, at least part of the fiber surface comprises a polyamide component as an adhesive component. The polyamide component (adhesive component) comprises a polyamide component containing a semi-aromatic polyamide at least having an aromatic ring unit and a $C_{3-7}$alkane unit which may have a branched alkyl chain (a $C_{1-3}$alkyl group). In particular, from the viewpoint of a balance between adhesivity and durability as a binder fiber, the polyamide component (adhesive component) preferably comprises a polyamide component further having a $C_{8-12}$alkane unit which may have a branched alkyl chain. A mode (or embodiment) in which the polyamide component has the $C_{8-12}$alkane unit includes a mode in which the semi-aromatic polyamide further has the $C_{8-12}$alkane unit as a copolymerization component (a mode having the $C_{8-12}$alkane unit in the polyamide component as a copolyamide (or a copolyamide mode)), and a mode in which the polyamide component comprises the semi-aromatic polyamide and other polyamide having the $C_{8-12}$alkane unit in combination (a mode having the $C_{8-12}$alkane unit as other polyamide in a mixture (or a mixture mode)). According to the present invention, the use of a fiber comprising a polyamide component having such an aromatic ring unit and a plurality (e.g., two) of alkane units for a battery separator ensures enough process passability necessary for separator production conditions, and then expresses better binder strength by the heat adhesion of such a fiber, and in addition, achieves a battery excellent in alkali resistance (electrolyte resistance), heat resistance, oxidation resistance at a high temperature.

[Binder fiber (A)]

Specifically, the polyamide component having a $C_{8-12}$alkane unit in a copolyamide comprises (a) a semi-aromatic copolyamide having an aromatic ring unit, a $C_{3-7}$alkane unit which may have a branched alkyl chain (e.g., a $C_{1-3}$alkyl group) and a $C_{8-12}$alkane unit which may have a branched alkyl chain (e.g., a $C_{1-3}$alkyl group). Hereinafter, a binder fiber comprising such a copolyamide as the polyamide component is referred to as (A) a binder fiber. Such a semi-aromatic copolyamide may include, for example, a semi-aromatic copolyamide having a dicarboxylic acid unit and a diamine unit, where the dicarboxylic acid unit contains an aromatic dicarboxylic acid unit in a proportion of not less than 60% by mole relative to the total dicarboxylic acid unit, and the diamine unit contains a $C_{3-7}$ (preferably $C_{4-7}$, and more preferably $C_{5-7}$)alkanediamine unit which may have a $C_{1-3}$alkyl group (particularly methyl group) and a $C_{8-12}$ (particularly $C_{8-10}$)alkanediamine unit which may have a $C_{1-3}$alkyl group (particularly methyl group), and the total proportion of the $C_{3-7}$alkanediamine unit and the $C_{8-12}$alkanediamine unit is not less than 60% by mole relative to the total diamine unit.

An aromatic dicarboxylic acid corresponding to the aromatic dicarboxylic acid unit may include, for example, an arenedicarboxylic acid [e.g., a $C_{8-20}$arenedicarboxylic acid such as phthalic acid, isophthalic acid, terephthalic acid, 2-methylterephthalic acid, 4-methylisophthalic acid, 1,4-naphthalenedicarboxylic acid, 2,5-naphthalenedicarboxylic acid, 2,6-naphthalenedicarboxylic acid, 2,7-naphthalenedicarboxylic acid, 1,4-phenylenedioxydiacetic acid (1,4-carboxymethyloxybenzene) or 1,3-phenylenedioxydiacetic acid (1,3-carboxymethyloxybenzene)], and a bisphenol-type dicarboxylic acid [e.g., a dibenzoic acid (e.g., diphenic acid, and 4,4'-biphenyldicarboxylic acid), 4,4'-oxydibenzoic acid, diphenylmethane-4,4'-dicarboxylic acid, diphenylsulfone-4,4'-dicarboxylic acid, and 2,2-bis(4-carboxyphenyl)propane]. These aromatic carboxylic acids may be used singly or in combination. Among these aromatic carboxylic acids, a $C_{8-20}$arenedicarboxylic acid, particularly, a benzenedicarboxylic acid such as terephthalic acid or isophthalic acid, is preferred. Further, in the light of improving adhesiveness by making the binder fiber amorphous, it is preferred to use terephthalic acid and isophthalic acid in combination.

A dicarboxylic acid corresponding to other dicarboxylic acid unit may include, for example, an aliphatic dicarboxylic acid such as malonic acid, dimethylmalonic acid, succinic acid, 3,3-diethylsuccinic acid, glutaric acid, 2,2-dimethylglutaric acid, adipic acid, 2-methyladipic acid, trimethyladipic acid, pimelic acid, azelaic acid, sebacic acid, suberic acid, undecanedioic acid, dodecanedioic acid or 5-methyl-decanedioic acid, and an alicyclic dicarboxylic acid such as 1,3-cyclopentanedicarboxylic acid or 1,4-cyclohexanedicarboxylic acid. These other dicarboxylic acid units may be contained in the range that the effects of the present, invention are not deteriorated. Moreover, as such other dicarboxylic acid, further, a unit derived from polycarboxylic acid such as trimellitic acid, trimesic acid or pyromellitic acid may be contained in the range that the binder fiber is melt-moldable (e.g., about 0.1 to 60% by mole, particularly about 1 to 10% by mole, relative to the total dicarboxylic acid unit). These other dicarboxylic acids may be used singly or in combination.

The proportion of the aromatic dicarboxylic acid unit is not less than 60% by mole (e.g., about 65 to 100% by mole), preferably not less than 70% by mole (e.g., about 75 to 100% by mole), more preferably not less than 80% by mole (e.g., about 85 to 100% by mole) and particularly not less than 90% by mole (e.g., 95 to 100% by mole) relative to the total dicarboxylic acid unit. In the case where the proportion of the aromatic dicarboxylic acid unit is too low, various physical properties such as adhesiveness, alkali resistance and oxidation resistance of the obtained binder fiber are deteriorated. In the case of using such a binder fiber for a battery separator, the obtained separator is decreased in strength, alkali resistance and oxidation resistance.

Among others, in view of the adhesivity of the binder fiber, the strength, alkali resistance, oxidation resistance, heat resistance, and others of the separator, it is preferred that terephthalic acid and/or isophthalic acid substantially occupy 100% relative to the total dicarboxylic acid unit. In particularly, the coexistence of the terephthalic acid unit and the isophthalic acid unit is preferred. In such a case, the molar ratio of the terephthalic acid unit relative to the isophthalic acid unit [the terephthalic acid unit/the isophthalic acid unit] is about 95/5 to 20/80, preferably about 90/10 to 25/75, and more preferably about 85/15 to 30/70. In the case where the molar ratio is in the above range, the adhesivity of the binder fiber, further, the performance required for the separator are highly satisfied.

A diamine corresponding to the $C_{3-7}$alkanediamine unit which may have a branched alkyl chain may include, for example, 1,3-trimethylenediamine, 1,4-tetramethylenediamine, 2,5-dimethylhexanediamine (particularly, 2,2,5,5-tetramethyl-1,4-tetramethylenediamine), 1,5-pentanediamine, 2-methyl-1,5-pentanediamine, 3-methyl-1,5-pentanediamine, 1,6-hexanediamine, 2,2,4-trimethylhexanediamine (particularly, 2,2,4-trimethyl-1,6-hexanediamine), 2,4,4-trimethylhexanediamine (particularly, 2,4,4-trimethyl-1,6-hexanediamine) and 1,7-heptanediamine. These diamines may be used singly or in combination. Among these diamines, a $C_{5-7}$alkanediamine which may have a $C_{1-3}$alkyl group (particularly, methyl, group) (for example, a hexanediamine which may have methyl group, such as 1,6-hexanediamine, 2,2,4-trimethylhexanediamine or 2,4,4-trimethylhexanediamine) is preferred. In particular, in the light of the adhesivity, alkali resistance and oxidation resistance, 1,6-hexanediamine is preferred.

Examples of the diamine corresponding to the $C_{8-12}$alkanediamine unit which may have a branched alkyl chain may include 1,8-octanediamine, 2-methyl-1,8-octanediamine, 1,9-nonanediamine, 5-methyl-1,9-nonanediamine, 1,10-decanediamine, 1,11-undecanediamine, 1,12-dodecanediamine, and others. These diamines may be used singly or in combination. Among these diamines, a $C_{8-10}$alkanediamine which may have a $C_{1-3}$alkyl group (particularly, methyl group) (for example, 1,9-nonanediamine, and 2-methyl-1,8-octanediamine) is preferred.

The proportion (molar ratio) of these two kinds of diamine units (the $C_{3-7}$alkanediamine unit which may have a branched alkyl chain and the $C_{8-12}$alkanediamine unit which may have a branched alkyl chain) [the former/the latter] is in the range of about 3/97 to 80/20, preferably about 5/95 to 75/25, and more preferably about 10/90 to 70/30. In the case where the proportion of these diamine units is within the above range, an amorphous semi-aromatic polyamide is obtained, and such a polyamide highly satisfies the adhesivity. In the case where the proportion is beyond the above range, the adhesiveness, alkali resistance, oxidation resistance, and others are deteriorated.

Thus, such an excellent effect that adhesiveness can be compatible with various resistance characteristics can be obtained due to the presence of both the $C_{3-7}$alkanediamine unit which may have a branched alkyl chain (a $C_{1-3}$alkylgroup) (particularly, at least one unit selected from the group consisting of a 2,2,4-trimethylhexanediamine unit, a 2,4,4-trimethylhexanediamine unit and a 1,6-hexanediamine unit) and the $C_{8-12}$alkanediamine unit which may have a branched alkyl chain (a $C_{1-3}$alkyl group) (a 1,9-nonanediamine unit and/or a 2-methyl-1,8-octanediamine unit) as diamine units. That is, in the case where the $C_{3-7}$alkanediamine unit which may have a branched alkyl chain is not present, the binder ability and temporary adhesivity are deteriorated. On the other hand, in the case where the $C_{8-12}$alkanediamine unit which may have a branched alkyl chain is not present, the alkali resistance and oxidation resistance of the binder fiber are deteriorated, and further the binder fiber is agglutinated in the production process of the fiber. Accordingly, for example, the fiber dispersibility in a paper production process is decreased.

In particular, in the case of using 1,6-hexadiamine in combination with 1,9-nonanediamine and 2-methyl-1,8-octanediamine, the proportion (molar ratio) of 1,9-nonanediamine relative to 2-methyl-1,8-octanediamine [1,9-nonanediamine/2-methyl-1,8-octanediamine] is about 99/1 to 40/60 and preferably about 90/10 to 45/55. Further, the proportion (molar ratio) of 1,6-hexanediamine relative to the total of 1,9-nonanediamine and 2-methyl-1,8-octanediamine [the former/the latter] is about 3/97 to 80/20, preferably about 5/95 to 75/25 and more preferably about 10/90 to 70/30. In the case where the diamine unit is within the above molar ratio range, the adhesiveness of the binder fiber (temporary adhesiveness (or provisional adhesiveness) and binder strength) and dispersibility (that is, dispersibility of the binder fiber to water in producing a separator by a wet paper production process) are well-balanced.

A diamine corresponding to other diamine unit may include, for example, an alicyclic diamine such as 1,3-cyclohexanediamine, 1,4-cyclohexanediamine, 1,3-cyclohexanedimethylamine, 1,4-cyclohexanedimethylamine, bis(4-aminocyclohexyl)methane, bis(4-aminocyclohexyl)propane, bis(3-methyl-4-aminocyclohexyl)methane, bis(3-methyl-4-aminocyclohexyl)propane, 5-amino-2,2,4-trimethyl-1-cyclopentanemethylamine, 5-amino-1,3,3-trimethylcyclohexanemethylamine, bis(aminopropyl)piperazine, bis(aminoethyl)piperazine, norbornanedimethylamine or tricyclodecanedimethylamine; and an aromatic diamine such as p-phenylenediamine, m-phenylenediamine, p-xylylenediamine, m-xylylenediamine, 4,4'-diaminodiphenylmethane, 4,4'-diaminodiphenylsulfone or 4,4'-diaminodiphenyl ether. These other diamines may be contained in the range that the effects of the present invention are not deteriorated (for example, in about 0.1 to 60% by mole, particularly, about 1 to 10% by mole, relative to the total diamine unit). These other diamines may be used singly or in combination.

The total proportion of the $C_{3-7}$alkanediamine unit which may have a branched alkyl chain (a $C_{1-3}$alkyl group) and the $C_{8-12}$alkanediamine unit which may have a branched alkyl chain (a $C_{1-3}$alkyl group) is not less than 60% by mole (e.g., about 65 to 100% by mole), preferably not less than 70% by mole (e.g., about 75 to 100% by mole), more preferably not less than 80% by mole (e.g., about 85 to 100% by mole) and particularly not less than 90% by mole (e.g., about 95 to 100% by mole) relative to the total diamine unit. In the case where the total proportion of these diamine units is too low, the obtained binder fiber is decreased in various physical properties such as adhesiveness (temporary adhesivity), alkali resistance and oxidation resistance.

Among them, in the case of using the binder fiber for a battery separator, it is preferred that 100% of the diamine unit substantially comprise the combination of at least one diamine unit selected from the group consisting of a 2,2,4-trimethylhexanediamine unit, a 2,4,4-trimethylhexanediamine unit and a 1,6-hexanediamine unit, and at least one diamine unit selected from the group consisting of a 1,9-nonanediamine unit and a 2-methyl-1,8-octanediamine unit, from the viewpoint of the strength, alkali resistance, oxidation resistance, heat resistance, and others of the separator.

The preferred semi-aromatic copolyamide (a) concretely includes a semi-aromatic copolyamide comprising the following dicarboxylic acid unit (1) and the following diamine unit (2).

(1) a dicarboxylic acid unit containing at least one first dicarboxylic acid unit selected from the group consisting of a terephthalic acid unit and an isophthalic acid unit, in which the proportion of the first dicarboxylic acid is not less than 60% by mole relative to the total dicarboxylic acid unit,

(2) a diamine unit containing at least one first diamine unit selected from the group consisting of a 2,2,4-trimethylhexanediamine unit, a 2,4,4-trimethylhexanediamine unit and a 1,6-hexanediamine unit and at least one second diamine unit selected from the group consisting of a 1,9-nonanediamine unit and a 2-methyl-1,8-octanediamine unit, in which the total proportion of the first diamine unit and the second diamine unit is not less than 60% by mole relative to the total diamine unit.

The process for producing such a semi-aromatic polyamide is not particularly limited to a specific one, and a conventional production process which is known as a process for producing a polyamide (for example, a solution polymerization using an acid chloride and a diamine as raw materials, an interfacial polymerization, a melt polymerization using a dicarboxylic acid and a diamine as raw materials, a solid-phase polymerization, and a polymerization by a melt-extruder) may be used.

The semi-aromatic polyamide used in the present invention is preferably capped in an end group(s) of the molecular chain with an end-blocking agent from the viewpoint of improving the strength, alkali resistance, oxidation resistance and others of the obtained binder fiber and battery separator formed therefrom. The end-blocking (or end-capping) of the semi-aromatic polyamide may be not less than 10% by mole (e.g., about 10 to 100% by mole), and is preferably not less than 40% by mole (e.g., about 40 to 99% by mole), more preferably not less than 50% by mole (e.g., about 50 to 95% by mole) and more preferably not less than 70% by mole (e.g., about 70 to 90% by mole). The end-blocking agent may be a mono-functional compound having reactivity to the amino group or carboxyl group of the polyamide end, and is not particularly limited to a specific one. From the viewpoint of reactivity and end-capping stability, a monocarboxylic acid (e.g., various aliphatic monocarboxylic acids or aromatic monocarboxylic acids) or a. monoamine (e.g., various aliphatic monoamines or aromatic monoamines) is preferred. The typical example of the preferred end-blocking agent includes benzoic acid.

[Binder fiber (B)]

Specifically, the polyamide component having the $C_{8-12}$alkane unit as the mixture mode comprises (d) a combination of (b) a semi-aromatic polyamide and (c) a semi-aromatic polyamide, where the semi-aromatic polyamide (b) has an aromatic ring unit and a $C_{3-7}$alkane unit which may have a branched alkyl chain (e.g., a $C_{1-3}$alkyl group), and the semi-aromatic polyamide (c) has an aromatic ring unit and a $C_{8-12}$alkane unit which may have a branched alkyl chain (e.g., a $C_{1-3}$alkyl group). Hereinafter, a binder fiber comprising such a combination as the polyamide component is referred to as (B) a binder fiber. Such a combination may include, for example, (d1) a combination of the followings (bl) and (c1):

(b1) a semi-aromatic polyamide which has a dicarboxylic acid unit containing an aromatic dicarboxylic acid unit in a proportion of not less than 60% by mole relative to the total dicarboxylic acid unit, and a diamine unit containing a $C_{3-7}$ (preferably $C_{4-7}$, and more preferably $C_{5-7}$)alkanediamine unit which may have a $C_{1-3}$alkyl group (particularly, methyl group), in a proportion of not less than 60% by mole relative to the total diamine unit, and
(c1) a semi-aromatic polyamide which, has a dicarboxylic acid unit containing an aromatic dicarboxylic acid unit in a proportion of not less than 60% by mole relative to the total dicarboxylic acid unit, and a diamine unit containing a $C_{8-12}$ (particularly $C_{8-10}$)alkanediamine unit which may have a $C_{1-3}$alkyl group (particularly, methyl group), in a proportion of not less than 60% by mole relative to the total diamine unit.

In the semi-aromatic polyamide (b), as an aromatic dicarboxylic acid corresponding to the aromatic dicarboxylic acid unit, the aromatic dicarboxylic acid exemplified in the paragraph of the binder fiber (A) may be used. These aromatic dicarboxylic acids may be used singly or in combination. Among these aromatic dicarboxylic acids, a $C_{8-20}$arenedicarboxylic acid, particularly, a benzenedicarboxylic acid such as terephthalic acid or isophthalic acid, is preferred. Further, in the light of improving adhesiveness by making the binder fiber amorphous, the combination use of terephthalic acid and isophthalic acid is preferred. That is, thesemi-aromaticpolyamide (b) is preferably amorphous.
As a dicarboxylic acid corresponding to other dicarboxylic acid unit, other dicarboxylic acid exemplified in the paragraph of the binder fiber (A) may be used.
The proportion of the aromatic dicarboxylic acid unit relative to the total dicarboxylic acid unit and the proportion of terephthalic acid relative to isophthalic acid are the same as those of the semi-aromatic polyamide (a) in the binder fiber (A).
As the $C_{3-7}$alkanediamine which may have a branched alkyl chain, the diamine exemplified in the paragraph of the binder fiber (A) may be used. These diamines may be used singly or in combination. Among these diamines, the preferred one includes a $C_{5-7}$alkanediamine which may have a $C_{1-3}$alkyl group (particularly, methyl group) (for example, a hexanediamine which may have methyl group, such as 1,6-hexanediamine, 2,2,4-trimethylhexanediamine or 2,4,4-trimethylhexanediamine). In particular, in the light of the adhesivity, alkali resistance and oxidation resistance, 1,6-hexanediamine is preferred.
As a diamine corresponding to other diamine unit, for example, the $C_{8-12}$alkanediamine which may have a branched alkyl chain (a $C_{1-3}$alkyl group) and other diamine which are exemplified in the paragraph of the binder fiber (A) may be used.
The proportion of the $C_{3-7}$alkanediamine unit which may have a branched alkyl chain (a $C_{1-3}$alkyl group) is not less than 60% by mole (e.g., about 65 to 100% by mole), preferably not less than 70% by mole (e.g., about 75 to 100% by mole), more preferably not less than 80% by mole (e.g., about 85 to 100% by mole) and particularly not less than 90% by mole (e.g., about 95 to 100% by mole) relative to the total diamine unit. In the case where the proportion of the diamine unit is too low, various physical properties such as adhesivity, alkali resistance and oxidation resistance are deteriorated.
The preferred semi-aromatic copolyamide (b) concretely includes a semi-aromatic polyamide comprising the dicarboxylic acid unit (1) exemplified in the paragraph of the binder fiber (A) and the following diamine unit (3).
(3) a diamine unit containing at least one first diamine unit selected from the group consisting of a 2,2,4-trimethylhexanediamine unit, a 2,4,4-trimethylhexanediamine unit and a 1,6-hexanediamine unit, in which the proportion of the first diamine unit is not less than 60% by mole relative to the total diamine unit.
In the semi-aromatic polyamide (c), as an aromatic dicarboxylic acid corresponding to the aromatic dicarboxylic acid unit, the aromatic dicarboxylic acid exemplified in the paragraph of the binder fiber (A) may be used. These aromatic dicarboxylic acids may be used singly or in combination. Among these aromatic dicarboxylic acids, a $C_{8-20}$arenedicarboxylic acid, particularly, a benzenedicarboxylic acid such as terephthalic acid, is preferred. Further, in the light of improving heat resistance, electrolyte resistance, resistance to oxidization and degradation by making the binder fiber crystalline, the use of terephthalic acid is preferred. That is, the semi-aromatic polyamide (c) is preferably crystalline.

As other dicarboxylic acid constituting the dicarboxylic acid unit, other dicarboxylic acid exemplified in the paragraph of the binder fiber (A) may be used.

The proportion of the aromatic dicarboxylic acid unit (particularly, a terephthalic acid unit) is not less than 60% by mole (e.g., about 65 to 100% by mole), preferably not less than 70% by mole (e.g., about 75 to 100% by mole), more preferably not less than 80% by mole (e.g., about 85 to 100% by mole) and particularly not less than 90% by mole (e.g., about 95 to 100% by mole) of the dicarboxylic; acid unit. In the case where the proportion of the aromatic dicarboxylic acid unit (particularly, a terephthalic acid unit) is too low, the crystallinity is deteriorated, and various physical properties such as heat resistance, electrolyte resistance, and resistance to oxidization and degradation are decreased. Among them, in the semi-aromatic polyamide (c), from the light of crystallinity, it is preferred that terephthalic acid substantially occupy 100% relative to the total dicarboxylic acid unit.

As a diamine corresponding to the $C_{8-12}$ alkanediamine unit which may have a branched alkyl chain (a $C_{1-3}$ alkyl group), the diamine exemplified in the paragraph of the binder fiber (A) may be used. These diamines may be used singly or in combination. Among these diamines, a $C_{8-10}$ alkanediamine which may have methyl group (e.g., 1,9-nonanediamine, and 2-methyl-1,8-octanediamine) is preferred. In particular, from the viewpoint of spinnability, the combination use of 1,9-nonanediamine and 2-methyl-1,8-octanediamine is preferred. The proportion (molar ratio) of 1,9-nonanediamine relative to 2-methyl-1,8-octanediamine [1,9-nonanediamine/2-methyl-1,8-octanediamine] is about 99/1 to 40/60 and preferably about 90/1.0 to 45/55. In the case where the proportion of these amines is within this range, a binder fiber having an improved spinnability and being capable of forming a uniform battery separator is obtained.

As a diamine corresponding to other diamine unit, for example, the $C_{3-7}$ alkanediamine which may have a branched alkyl chain (a $C_{1-3}$ alkyl group) and other diamine which are exemplified in the paragraph of the binder fiber (A), and others may be used.

The proportion of the $C_{8-12}$ alkanediamine unit which may have a branched alkyl chain (a $C_{1-3}$ alkyl group) is not less than 60% by mole (e.g., about 65 to 100% by mole), preferably not less than 70% by mole (e.g., about 75 to 100% by mole), more preferably not less than 80% by mole (e.g., about 85 to 100% by mole) and particularly not less than 90% by mole (e.g., about 95 to 100% by mole) relative to the total diamine unit. Among them, in the semi-aromatic polyamide (c), from the light of crystallinity, it is preferred that 1,9-nonanediamine and/or 2-methyl-1,8-octanediamine (particularly, 1,9-nonanediamine and 2-methyl-1,8-octanediamine) substantially occupy 100% relative to the total diamine unit.

The preferred semi-aromatic copolyamide (c) concretely includes a semi-aromatic polyamide comprising the following dicarboxylic acid unit (4) and the following diamine unit (5):

(4) a dicarboxylic acid unit containing a terephthalic acid unit in a proportion of not less than 60% by mole relative to the total dicarboxylic acid unit,
(5) a diamine unit containing at least one second diamine unit selected from the group consisting of a 1,9-nonanediamine unit and a 2-methyl-1,8-octanediamine unit, in which the proportion of the second diamine unit is not less than 60% relative to the total diamine unit.

Thus, in the binder fiber (B), by using two kinds of semi-aromatic polyamides (the semi-aromatic polyamide (b) and the semi-aromatic polyamide (c)) in combination, such an excellent effect that adhesiveness can be compatible with various resistance characteristics can be obtained. That is, in the case where the semi-aromatic polyamide (b) is not present, the obtained binder fiber has neither binder ability nor temporary adhesivity. On the other hand, in the case where the semi-aromatic polyamide (c) is not present, the alkali resistance and oxidation resistance of the binder fiber cannot be obtained, and further the binder fiber is agglutinated in the production process of the fiber. Accordingly, for example, the fiber dispersibility in a paper production process is decreased. The combination (d) of the semi-aromatic polyamide (b) and the semi-aromatic polyamide (c) is usually a mixture obtained by melt-kneading both these polyamides with the use of an extruder or other means.

The proportion (weight ratio) of the semi-aromatic polyamide (b) relative to the semi-aromatic polyamide (c) [the former/the latter] is about 10/90 to 90/10, preferably 20/80 to 80/20 and more preferably 30/70 to 70/30. The proportion beyond the above range is not preferred because the adhesiveness and dispersibility of the binder fiber lose the balance. Incidentally, in the present invention, the amide bond exchange reaction of between the semi-aromatic polyamide (b) and the semi-aromatic polyamide (c) sometimes occurs depending on the kneading state. In the present invention, such an exchange reaction is more preferred because the binder strength of the binder fiber is increased. In order to induce the exchange reaction, for example, the semi-aromatic polyamide (b) and the semi-aromatic polyamide (c) are preferably melt-kneaded at a temperature range of about 280 to 350°C (particularly, about 280 to 330°C) for about 1 to 30 minutes (particularly, about 3 to 25 minutes).

With respect to the production processes of the semi-aromatic polyamide (b) and the semi-aromatic polyamide (c) or the end capping thereof, the same manners as the semi-aromatic polyamide (a) are used.

In the present invention, among the binder fiber (A) and the binder fiber (B), the binder fiber (B) which comprises two kinds of semi-aromatic polyamides in combination is preferred in the light of adhesiveness. Further, according to the present invention, at least part of the surface of the binder fiber may comprise a polyamide component containing the semi-aromatic polyamide (a), the semi-aromaticpolyamide (b) and the semi-aromatic polyamide (c) in combination.

[Binder fiber and process for producing the same]

The binder fiber of the present invention may contain other polymer component (e. g. , other thermoplastic resin or thermosetting resin), and in addition, a conventional additive, afiller, various stabilizers (e.g., an antioxidant, a heat stabilizer, and a light stabilizer), a coloring agent, a plasticizer, a molecular weight-reducing agent, and others. These polymer components and additives may be used singly or combination.

In the binder fiber of the present invention, such a polyamide component comprises at least part of the fiber surface. The polyamide component comprises preferably not less than 50% and more preferably not less than 70% (particularly, not less than 90%) of the fiber surface. In particular, the polyamide component preferably comprises the whole surface of the fiber (substantially 100%). Such a fiber that the polyamide component comprises the whole surface thereof may include a fiber comprising the polyamide component wholly, and in addition, a conjugated fiber which comprises the polyamide component and other polymer component in combination and in which the polyamide component comprises the whole surface thereof. The shape of the conjugated fiber may include a sheath-core structure conjugated fiber, a sea-island structure conjugated fiber, and others.

The binder fiber can be spun by a conventionally known general melt-spinning method of a polyamide. For example, as the binder fiber, an undrawn (or unstretched) raw spun yarn may be utilized as it stands, or a drawn (or stretched) yarn obtained by a wet-heat or dry-heat drawing a raw spun yarn may be utilized. Incidentally, although drawing can make the fiber diameter smaller and improve alkali resistance, the adhesiveness of the fiber is deteriorated. Therefore, the kind of the binder fiber is preferably selected as usage.

As mentioned above, the binder fiber may be a binder fiber obtained by forming only the polyamide component as an adhesive component, or may be a conjugated fiber obtained by using the polyamide component and other thermoplastic resin in combination. In particular, from the viewpoint of heat resistance, the binder fiber is preferably a conjugated fiber obtained by using the polyamide component and a crystalline resin in combination. The shape of the conjugated fiber may include a sheath-core structure conjugated fiber, a sea-island structure conjugated fiber, a laminate-shaped conjugate fiber, and others. It is sufficient that the polyamide component as the adhesive component is exposed on the fiber surface. In particular, from the viewpoint that the polyamide component can be exposed on the whole surface of the fiber, a sheath-core structure conjugated fiber or a sea-island structure conjugated fiber (particular, a sheath-core structure conjugated fiber) is preferred.

The above-mentioned other thermoplastic resin may include, for example, a polyamide-series resin, a polyester-series resin, a polyurethane-series resin, a polycarbonate-series resin, an olefinic resin, an acrylic resin, and a styrenic resin. These thermoplastic resins may be used singly or in combination. Among these thermoplastic resins, in the light of, e.g., adhesiveness to the polyamide component, a polyamide resin (e.g., an aliphatic polyamide such as a polyamide 6, a semi-aromatic polyamide, and an aromatic polyamide such as MXD6), particularly a semi-aromatic polyamide such as the semi-aromatic polyamide (c), is preferred.

In the case of using the conjugated fiber as the binder fiber, the melting point or softening point of other thermoplastic resin is preferably higher than that of the polyamide component as the adhesive component (e.g., by not lower than 5°C, and preferably by not lower than 10°C). For example, a sheath-core structure conjugated fiber comprising the semi-aromatic polyamide (c) as a core component, and the semi-aromatic polyamide (a) or the combination, (d) of the semi-aromatic polyamide (b) and the semi-aromatic polyamide (c) as a sheath component is preferred because the core and the sheath are hard to separate and further a separator comprising such a fiber highly satisfies performance required for a battery separator. In the conjugated fiber, the proportion (weight ratio) of the core relative to the sheath [the core/the sheath] is about 90/10 to 10/90, preferably about 80/20 to 25/75 and more preferably 75/25 to 40/60.

Further, in the sheath-core structure conjugated fiber, the melting peak enthalpy of the polyamide component as the sheath component is preferably smaller (for example, about 10 to 50 J/g smaller, and preferably about 15 to 45 J/g smaller) than that of the polymer as the core component. In particular, preferably, the melting peak enthalpy of the semi-aromatic polyamide (a) or combination (d) as the sheath component is 0 to 50 J/g and is smaller than that of the semi-aromatic polyamide (c). In this case, only the sheath component is melted, and the core component retains the fiber shape. As a result, the fiber has such a feature that the adhesive strength, that is, the strength of the separator is enhanced. More preferably, the melting peak enthalpy of the semi-aromatic polyamide (a) or combination (d) is 3 to 40 J/g, and is 10 to 50 J/g (particularly 15 to 45 J/g) smaller than that of the semi-aromatic polyamide (c).

In the binder fiber of the present invention, the crystallization peak temperature of the adhesive component (particularly, the semi-aromatic polyamide (a) or combination, (d)) (the exothermic peak value generated in the crystallization process) is, for example, about 160 to 200°C, preferably about 165 to 190°C and more preferably about 165 to 185°C. In the case where the crystallization peak temperature is beyond the above range, the binder fiber tends to deteriorate adhesiveness, alkali resistance, and resistance to oxidization and degradation. The crystallization peak temperature depends on the degree of the above-mentioned amide exchange reaction. As the exchange reaction proceeds, the crystallization peak is shifted to a higher temperature and the crystallization peak area is smaller. Further, depending on the species of the polyamide, since the crystallization peak sometimes disappears by drawing, an undrawn yarn is preferred.

The mean fineness of the binder fiber is, for example, about 0.01 to 5 dtex (decitex), preferably about 0.1 to 4.5 dtex and more preferably about 0.4 to 4 dtex. In the case where the fineness is too small, not only it is greatly difficult to industrially produce the binder fiber but also, for example, the fiber dispersibility is deteriorated in producing a battery separator by a wet paper production process, and an object separator having a uniform formation cannot be obtained in some cases. Moreover, in the case where the fineness is too large, the pore size of a separator comprising the binder fiber becomes larger. Accordingly, such a separator easily tends to cause short-circuit, and the strength of the separator is deteriorated.

The fiber length of the binder fiber is not particularly limited to a specific one. The obtained undrawn yarn or drawn yarn may be selected as usage by cutting into each desired fiber length. For example, in the case of producing a nonwoven fabric by a wet paper production process, e.g., for a battery separator, the mean fiber length (cut length) of the binder fiber is, for example, about 1 to 20 mm and preferably about 3 to 15 mm. In the case where the fiber length is too short, not only industrial productivity is decreased, but also thus obtained separator is low in tensile strength. As a result, in a battery production process, there is a worry about such troubles as a broken separator. On the other hand, in the case where the fiber length is too long, the fiber dispersibility tends to deteriorate, and an object separator having a uniform formation cannot be obtained in some cases. Moreover, in the case of a dry-laid nonwoven fabric, from the viewpoint of the card-passing property and the strength of the obtained separator, the cut length is preferably about 5 to 75 mm.

To the binder fiber, for the purpose of improvement in monofilament dispersibility for making a nonwoven fabric by a wet paper production process or improvement in card-passing property for a dry-laid nonwoven fabric, a surfactant is preferably added at the stage of the fiber production. In the present invention, particularly, in order to be used for a separator of a battery accompanying an electrochemical reaction, a nonionic surfactant free from a metal ion (for example, an ester-type nonionic surfactant such as an ester of a polyhydric alcohol with a fatty acid, and an ether-type nonionic surfactant having a polyoxyethylene group) is preferably used.

[Battery separator]

The battery separator of the present invention comprises a main fiber constituting a separator skeleton, and the binder fiber. The separator of the present invention may further contain, if necessary, a fiber (a reinforcing fiber) for reinforcing the separator strength, or a fiber (a filling fiber) for controlling the pore size of the separator and enhancing the short-circuit resistance thereof.

The main fiber is not particularly limited to a specific one as far as the melting point or softening point thereof is higher than that of the binder fiber. As the main fiber, a conventional synthetic or natural fiber may be used. The main fiber may include, for example, a polyolefinic fiber (e.g., a polypropylene, and a polymethylpentene fiber), a polyvinyl alcohol fiber, an ethylene-modified polyvinyl alcohol fiber, a polyamide-series fiber, a polyester-series fiber, a polyparaphenylenebenzobisoxazole fiber, a polyphenylene sulfide fiber, and a cellulose fiber (e.g., a rayon, and a pulp). These fibers may be used singly or in combination. Incidentally, for the purpose, the main fiber may be a fiber exemplified as the after-mentioned reinforcing fiber (for example, a fully aromatic polyamide fiber, and a polyparaphenylenebenzobisoxazole fiber).

Among these fibers, from the viewpoint of adhesiveness to the binder fiber comprising the polyamide component, and others, the preferred main fiber includes a polyamide-series fiber, for example, an aliphatic polyamide fiber (e.g., a fiber comprising a polyamide 46, a polyamide 6, a polyamide 66, a polyamide 610, a polyamide 612, a polyamide 11, a polyamide 12, and the like), a fully aromatic polyamide fiber (e.g., a fiber comprising a polyparaphenyleneterephthalamide, a polymetaphenyleneterephthalamide, and the like), a semi-aromatic polyamide fiber [e.g., a polyamide 6-IT (a polyamide which comprises a diamine unit comprising hexamethylenediamine and a dicarboxylic acid unit comprising the combination of isophthalic acid and terephthalic acid), a polyamide 6-6IT (a polyamide which comprises a diamine unit comprising hexamethylenediamine and a dicarboxylic acid unit comprising the combination of adipic acid, isophthalic acid and terephthalic acid), and a polyamide 9M-T (a polyamide which comprises a diamine unit comprising the combination of 1,9-nonanediamine and 2-methyl-1,8-octanediamine and a dicarboxylic acid unit comprising terephthalic acid)]. Among them, in the light of high adhesion strength to the binder fiber and excellent mechanical properties as the main fiber, a semi-aromatic polyamide fiber comprising a polyamide 9M-T, and the like are particularly preferred.

The yarn fineness (mean fineness) of the main fiber is, for example, about 0.01 to 5 dtex, preferably about 0.03 to 4.5 dtex and more preferably about 0.05 to 4 dtex. In the case where the fineness is beyond this range, the same problems as the case of the binder fiber occur. Moreover, these fibers may be obtained by, as conducted in producing a regular paper, beating a fiber to be used prior to the paper production for fibrillating the fiber and making the mean fineness and length of the fiber smaller concurrently. The proportion of the main fiber in the total fiber constituting the battery separator is usually about 40 to 90% by weight, preferably about 40 to 85% by weight and more preferably about 45 to 80% by weight.

As the reinforcing fiber, a high-tenacity fiber having a tensile strength of not less than 12 cN/dtex (e.g., about 12 to 40 cN/dtex, and preferably about 15 to 40 cN/dtex) is used. Such a high-tenacity fiber may be, for example, an inorganic fiber (e.g., a carbon fiber, and a glass fiber). From the viewpoint of adhesiveness to the main fiber or the binder fiber, an organic fiber is usually employed as such a high-tenacity fiber. The organic fiber may include, for example, a high-tenacity polyethylene fiber, a high-tenacity (crosslinked) polyvinyl alcohol fiber, a fully aromatic polyamide fiber (an aramid fiber), a fully aromatic polyester fiber (a polyarylate fiber), and a polyparaphenylenebenzobisoxazole fiber. These high-tenacity fibers may be used singly or in combination.

Among these high-tenacity fibers, in the light of high tenacity and excellent alkali resistance, a polyparaphenyleneterephthalamide fiber, a polyparaphenylenebenzobisoxazole fiber, and a high-tenacity polyvinyl alcohol fiber, particularly, a polyparaphenylenebenzobisoxazole fiber, are preferred. In particular, in the case where there are problems concerning winding properties in assembling an alkaline battery, the suitable blending of at least one member selected from the group consisting of a polyparaphenyleneterephthalamide fiber, a polyparaphenylenebenzobisoxazole fiber and a high-tenacity polyvinyl alcohol fiber as the reinforcing fiber ensures to impart a tensile strength for standing the tension in the winding and mechanical properties such as an incision strength resistance to cutting by the burr of an electrode material to the separator.

These high-tenacity fibers may be in the form of the fiber itself (the form of the spun fiber as it is), or in the pulp-like form. In the present invention, the pulp-like material usually means a fiber of a form fibrillated by a beating treatment, or others conducted for producing a paper.

The proportion of the reinforcing fiber in the total fiber constituting the battery separator is usually about 0 to 30% by weight, preferably about 0.1 to 20% by weight and more preferably about 0. 5 to 10% by weight (particularly about 1 to 5% by weight). The mean fineness of the reinforcing fiber is as the same as that of the above-mentioned binder fiber, and for example, about 0.01 to 5 dtex, preferably about 0.03 to 4.5 dtex and more preferably about 0.05 to 4 dtex.

As the filling fiber (dense fiber), an ultra-fine fiber of not larger than 1 dtex (e.g., about 0.001 to 1 dtex, preferably about 0.01 to 0. 8 dtex and more preferably about 0.03 to 0.5 dtex) is usually employed for controlling the pore size of the battery separator. As the filling fiber, for example, the fiber exemplified in the main fiber may be used. From the viewpoint of adhesiveness to the main fiber, usually, the same species or same series (particularly, the same) fiber as the main fiber is employed. These filling fibers may be used singly or in combination.

The proportion of' the filling fiber in the total fiber constituting the battery separator is, for example, about 1 to 30% by weight, preferably about 3 to 20% by weight and more preferably about 5 to 15% by weight. Incidentally, the filling fiber may be added in a proportion above this range if necessary. For example, the function of the filling fiber may be imparted to the main fiber itself by using an ultra-fine fiber as the main fiber.

The process for producing the filling fiber may include a process which comprises mechanically fibrillating a fiber with the use of a refiner, a beater or other means, a process which comprises removing a sea component from a sea-island structure conjugated spun fiber, a process which comprises dividing a dividing conjugated fiber, and others.

The proportion of the binder fiber in the total fiber constituting the battery separator may be, for example, about 10 to 60% by weight, preferably about 12 to 50% by weight and more preferably about 15 to 45% by weight. In the case where the proportion of the binder fiber is too low, the tensile strength of the separator tends to lower due to the lack of adhesiveness. On the other hand, in the case where the proportion is too high, heat adhesion brings larger contraction to the separator, or the separator tends to lower in heat resistance.

In the separator of the present invention, it is necessary that the melting points or softening points of the main fiber, the reinforcing fiber and the filling fiber are higher than that of the polyamide component constituting the binder fiber used in combination [particularly, the semi-aromatic polyamide (a) or (b)], respectively. In the preferred case, these fibers have 10°C or higher (e.g., 10 to 100°C higher) melting points or softening points than that of the polyamide component, respectively. Incidentally, as a rayon, a pulp or others, a fiber having neither melting point nor softening point is included in a fiber having such a high melting point or softening point.

The fiber lengths (cut lengths) of the main fiber, the reinforcing fiber and the filling fiber are, for example, about 0 .1 to 2 0 mm, preferably about 0.5 to 15 mm, respectively, depending on the yarn fineness of the fiber, in the case of the wet-laid nonwoven fabric.

The battery separator of the present invention may be a woven fabric, and is usually a nonwoven fabric which is formed into a sheet with adhesivity of the binder fiber. The nonwoven fabric may include, for example, a dry-laid nonwoven fabric, a wet-laid nonwoven fabric, a meltblown nonwoven fabric, and a spunbonded nonwoven fabric. Among these nonwoven fabrics, from the viewpoint of a balance between the strength and properties of the separator, a wet-laid nonwoven fabric is preferred. Further, the separator of the present invention may be a laminated product formed from these nonwoven fabrics.

Depending on an automatic apparatus for winding groups used in producing a battery (a apparatus for automatically assembling a battery, and for rolling up a separator and storing the rolled separator in a. case), in the case where the separator is potentially broken due to a failure of standing the tension of the automatic apparatus for winding groups, a binder fiber other than the binder fiber of the present invention [particularly, the binder fibers (A) and (B)] may be blended for the purpose of increase in the tensile strength. As such a binder fiber, for example, an ethylene-modified polyvinyl alcohol fiber may be preferably used. Although there is a possibility that the ethylene-modified polyvinyl alcohol fiber is decomposed, for example , during the use of an alkaline secondary battery, the fiber decomposition, does not significantly deteriorate the battery performance. Accordingly, such a binder fiber may be used in the range that the effects of the present invention is not decreased.

In the present invention, particularly, since both a polyamide 9M-T fiber (a polyamide fiber obtained from 1.9-nonanediamine, 2-methyl-1,8-octanediamine and terephthalic acid) and a polyparaphenylenebenzobisoxazole fiber are excellent in electrolyte resistance, oxidation resistance and heat resistance, it is preferred to use the polyamide 9M-T fiber as the main fiber and the filling fiber, and additionally use the polyparaphenylenebenzobisoxazole fiber as the reinforcing fiber.

The fabric weight of the battery separator of the present invention is not particularly limited to a specific one. For example, in order that an alkaline battery may have a larger capacity, the fabric weight is not more than 80 g/m$^2$ (e.g., about 10 to 80 g/m$^2$), preferably not more than 75 g/m (e.g., about 15 to 75 g/m$^2$) and more preferably not more than 70 g/m$^2$ (e.g., about 20 to 70 g/m$^2$). Too small fabric weight brings deterioration in electrolyte leakage resistance.

The thickness of the battery separator is not particularly limited to a specific one. In order to give an efficient battery reaction, the distance between the positive electrode and the negative electrode is preferably as small as possible. Specifically, the thickness of the separator is, for example, about 20 to 300 $\mu$m, preferably about 30 to 250 $\mu$m and more preferably about 50 to 200 $\mu$m (particularly about 50 to 150 $\mu$m). In the case where the thickness of the separator is too large, it is difficult to increase the battery capacity, because the increase of battery capacity is enabled by reducing the internal resistance, increasing the amount of the active material, or elongating the electrode plate. On the other hand, too small thickness deteriorates electrolyte leakage resistance.

The tensile strength necessary for the battery separator is, for example, not less than 3 kN/m to stand the tension of a high-speed automatic apparatus for winding groups and obtain a high productivity. The tensile strength is preferably about 3 to 30 kN/m and more preferably about 3.1 to 20 kN/m. Depending on the species of the automatic apparatus for winding groups and the production condition, in the case where the tensile strength is too small, the separator is sometimes broken due to a failure of standing the tension of the automatic apparatus for winding groups in the battery production, or the width of the separator sometimes becomes narrower so that the separator cannot be stably group-wound. On the other hand, although the upper limit is not particularly limited to a specific one, it is difficult to produce a separator having a tensile strength over 30 kN/m. In the present invention, a separator having a high tensile strength not less than 3 kN/m is achieved by using the fiber comprising the polyamide component of the present invention as the binder fiber, using a fiber having a high strength as the main fiber, and further using the reinforcing fiber, and increasing the fabric weight.

The breaking length of the battery separator is, as in the case of the tensile strength, related to process passability in the winding process, strength against electrode expansion in use of the battery, and others. The breaking length of the separator is, for example, not less than 3 km, preferably about 3 to 45 km and more preferably about 4.5 to 30 km. In the case where the breaking length is not less than 3 km, it is possible to incorporate a separator having a low fabric weight in a battery by using a low-speed automatic apparatus for winding groups or other means. Moreover, such a separator can be used without short-circuit by electrode expansion in use of the battery. Further, by lowering the fabric weight of the separator, a space for the electrode material can be increased so that a high-capacity battery can be obtained. On the other hand, although the upper limit is not particularly limited to a specific one, it is difficult to produce a separator having a breaking length over 45 km. In the present invention, a high breaking length can be achieved by using the binder fiber of the present invention.

The pore size of the battery separator is related to electrolyte leakage resistance. The electrolyte leakage resistance also depends on the fabric weight and the thickness. The pore size is not particularly limited to a specific one as far as a separator (a nonwoven fabric for separator) can be formed. The mean pore size may be selected from the range of not more than 50 $\mu$m, and the maximum pore size may be selected from the range of not more than 80 $\mu$m. From the viewpoints of realizing a high capacity and a large current discharge and realizing a low fabric weight and a small thickness, the mean pore size is not more than 30 $\mu$m (e. g. , about 1 to 30 $\mu$m) and preferably not more than 25 $\mu$m (e.g., about 3 to 25 $\mu$m), and the maximum pore size is not more than 50 $\mu$m (e.g., about 1 to 50 $\mu$m) and preferably not more than 45 $\mu$m (e.g., about 10 to 45 $\mu$m). Incidentally, a separator having a maximum pore over 50 $\mu$m cannot be used due to insufficient short-circuit resistance in some cases. Moreover, in the case where the mean pore size is

less than 1 μm, the resistance between the positive electrode and the negative electrode is increased in some cases. The pore size can be varied depending on the fabric weight of a separator, the yarn fineness of a fiber to be used, the amount of a filling fiber, the amount of a binder fiber, the heat press condition in producing a nonwoven fabric, and others. For example, the pore size can be decreased by increasing the fabric weight, decreasing the fiber yarn fineness, increasing the amount of the filling fiber or binder fiber, and harshening the heat press condition.

The incision strength resistance of the battery separator may be, for example, not less than 70 mN·m$^2$/g (e.g., about 70 to 1000 mN·m$^2$/g). In particular, for standing the tension of a high-speed automatic apparatus for winding groups, the incision strength resistance is preferably not less than 120 mN·m$^2$/g (e.g., about 120 to 1000 mN·m$^2$/g) and more preferably not less than 140 mN·m$^2$/g (e.g., about 140 to 500 mN·m$^2$/g). The separator having an incision strength resistance of less than 70 mN·m$^2$/g is easy to be damaged at the burr or edge of the electrode plate when a battery is assembled by winding the separator at a high tension, and as a result, short-circuit is easy to occur. Although the upper limit is not particularly limited to a specific one, it is difficult to produce a separator having an incision strength resistance over 1000 mN·m$^2$/g. In order to increase the incision resistance (strength), a method which comprises increasing the amount of the high-tenacity fiber fiber, a method which comprises increasing the fabric weight of a nonwoven fabric, a method which comprises increasing the amount of a binder fiber, and others can be used.

Since the battery separator of the present invention is excellent in electrolyte resistance, alkali resistance, heat resistance, resistance to oxidization and degradation, and others, the battery separator is usable for various batteries such as an alkaline battery (e.g., an alkaline manganese battery, and an alkaline secondary battery), a silver battery, a lead storage battery and an air battery. Among others, the battery separator is widely used for an alkaline battery comprising a metal oxide or metal hydroxide as a positive electrode, and cadmium, zinc, iron, or a hydroxide or hydrogen absorbing alloy thereof as a negative electrode, and other batteries. In particular, the battery separator is preferably usable for an alkaline secondary battery which is repeatedly charged and discharged under a high rate (e.g., a silver oxide-zinc storage battery, a nickel-cadmium storage battery, a nickel metal-hydride storage battery, a nickel-zinc storage battery, and a nickel-iron storage battery).

The heat resistance, oxidation resistance and electrolyte resistance (alkali resistance) of the alkaline secondary battery separator is related to the cycle life of the battery. Since the alkaline secondary battery requires a higher capacity and a higher power, the ultimate temperature of the inside of the battery due to the charge and discharge cycle is further tending to increase. In such a case, the alkali aqueous solution increases in temperature so that the separator is deteriorated due to decomposition. Such a deteriorated separator lowers the electrolyte retention capability of the separator, and the function as a membrane for inhibiting the dendrite growth. As a result, the requirement for the higher capacity and higher power triggers the shortening of the cycle life.

In the case of using the battery for a power tool such as a machine tool, the battery is often discharged under a high rate, and the internal temperature, of the battery is sometimes over 170°C. Therefore, the requirement for heat resistance of the separator has been increased, and the separator is expected to retain the shape and perform the function even at over 170°C. For example, in the case of an olefinic separator comprising a polypropylene fiber as a main component, the separator cannot retain the shape as a separator at a temperature of not lower than 170°C at which the polypropylene reaches a melting point thereof.

In the present invention, the shape retention of a separator after being immersed at 140°C or 180°C for 30 minutes in a potassium hydroxide (KOH) aqueous solution having a concentration of 30 % by weight, the weight retention of the shape-retained separator, and the strength retention thereof are used as indices of heat resistance.

In the heat resistance of the separator of the present invention, the separator preferably has a shape retention at 140°C. and more preferably has a shape retention even at 180°C. Among fibers constituting the separator, the binder fiber usually has the lowest heat resistance. Accordingly, the use of the binder fiber of the present invention enhances the heat resistance the separator. The adhesion mechanism of the binder fiber of the present invention is a heat adhesion utilizing an amorphous component of the adhesive component. Accordingly, the amount of the amorphous component is larger as the adhesiveness is higher, and as a result the heat resistance lowers. Therefore, by controlling the amorphous component minimally so as to obtain the minimum adhesiveness, the heat resistance of the adhesive component, that is, the heat resistance of the separator can be maintained. The amount of the amorphous component is controlled by the resin formulation of the adhesive component, the granulation condition, the condition of the fiber production, and others.

Specifically, in the battery separator of the present invention, the weight retention at 140°C is preferably not less than 90% (e.g., 90 to 100%) and more preferably not less than 95% (e.g., 95 to 99.9%). The strength retention at 140°C is preferably not less than 60% (e.g. , 60 to 100%), more preferably not less than 70% (e.g., 70 to 99.9%) and particularly not less than 80% (e.g., 80 to 99.5%).

The weight retention of the separator at 180°C is preferably not less than 80% (e.g., 80 to 100%) and more preferably not less than 90% (e. g. , 90 to 99%). The strength retention at 180°C is preferably not less than 10% (e.g., 10 to 70%), more preferably not less than 15% (e.g., 15 to 65%) and particularly not less than 20% (e.g., 20 to 60%). Although it is better that both the weight retention and the strength retention at 180°C are higher, the upper limit of the strength retention is about 70% in the current technique. Depending on the species of the battery, usually, in the case where the strength retention is not less than 10%, the separator retains the shape and can sufficiently carry out the function.

Moreover, when the inside, of the battery reach a high temperature, the separator is easily oxidized and deteriorated along with the oxidation-reduction reaction at the electrode in charge and discharge. In the present invention, the shape retention of the separator after being immersed at 50°C or 80°C for 1 hour in a mixed aqueous solution of a $KMnO_4$ aqueous solution (250 ml) having a concentration of 5% by weight and a KOH aqueous solution (50 ml) having a concentration of 30% by weight, the weight retention, of the shape-retained separator, and the strength retention thereof are used as indices of heat resistance.

In the oxidation resistance of the separator of the present invention, the separator preferably has a shape retention at 50°C, and more preferably has a shape retention even at 80°C.

Specifically, in the battery separator of the present invention, the weight retention at 50°C is preferably not lass than 90% (e.g., 90 to 100%), more preferably not less than 95% (e.g., 95 to 99.99%) and particularly not less than 97% (e.g., 97 to 99.9%). The strength retention at 50°C is preferably not less than 60% (e.g., 60 to 100%), more preferably not less than 70% (e.g., 70 to 99.99%) and particularly not less than 80% (e.g., 80 to 99.9%).

The weight retention of the separator at 80°C is preferably not less than 30% (e.g., 30 to 100%), more preferably not less than 50% (e.g., 50 to 99.9%) and particularly not less than 70% (e.g., 70 to 99.5%). The strength retention at 80°C is, for example, not less than 1%, preferably not less than 2% (e.g., 2 to 70%), more preferably not less than 3% (e.g., 3 to 50%) and particularly not less than 5% (e.g., 5 to 30%), Although it is better that both the weight retention and the strength retention at 80°C are higher, the upper limit of the strength retention is about 70% in the current technique.

[Production process of battery separator]

Next, the production process of the separator of the present invention is described. The production process of the separator of the present invention is not particularly limited to a specific one. In the case where the separator comprises a nonwoven fabric, the process may be a conventional production process of a nonwoven fabric, for example, a process of using a prepared fiber (e.g., a production process of a dry-laid nonwoven fabric, and a production process of a wet-laid nonwoven fabric), or may be a process of directly producing a sheet from a fiber production process (e.g., a meltblown process, and a spunbonded process). Further, nonwoven fabrics produced by such a process may be laminated. In the present invention, among these production processes, usually, the production process of a dry- or wet-laid nonwoven fabric is employed.

In the production process of a dry-laid nonwoven fabric, since a web is formed by a card, an airlaid or others and the wed shape is retained with thermal bonding, resin bonding, needle punching, hydroentangling or others, a fiber having a large fiber diameter and along fiber length can be used. Therefore, in the case where a dry-laid nonwoven fabric obtained by such a process has a high fabric weight, the dry-laid nonwoven fabric is advantageous as a separator in the light of strength. However, in the case where a dry-laid nonwoven fabric obtained by such a process has a low fabric weight, the dry-laid nonwoven fabric is insufficient in short-circuit resistance due to poorness in formation, and as a result, such a dry-laid nonwoven fabric cannot be used as a separator.

On the other hand, in the production process of a wet-laid nonwoven fabric (wet paper production process), the production speed thereof is higher than that of other production process. In the production process, a wet-laid nonwoven fabric may be produced by mixing fibers with different fiber diameters or multiple fibers in arbitrary proportions with the use of the same apparatus, or may be produced by superimposing (laminating) a plurality of sheets made with the use of several bathes. Further, the shape of the fiber is widely selected, from a staple-like shape to a pulp-like shape. Furthermore, a fiber with any fiber diameters from an ultra-fine fiber to a thick fiber is usable, and is of wide application. Accordingly, for example, the pore size of the non-woven fabric can be controlled by using an extremely ultra-fine fiber with about 0.01 dtex, an ultra-fine fiber with about 0.5 dtex and a regular fiber with about 2 dtex in combination. Moreover, the strength of the separator can be also improved by mixing the high-tenacity fiber and the binder fiber.

In particular, to increase the efficiency and the capacity of the battery, it is preferred to reduce the thickness of the separator. However, the short-circuit resistance decreases as the thickness of the separator is smaller. In particular, in a separator having a thickness of not larger than 100 $\mu$m, it is particularly preferred to employ a production process of obtaining a separator formed from a wet-laid nonwoven fabric containing an extremely ultra-fine fiber with about 0.01 dtex therein and impart excellent, formation and excellent short-circuit resistance to the separator. Accordingly, in the present invention, the production process of a wet-laid nonwoven fabric is particularly preferred.

Specifically, in the wet paper production process (paper production process), firstly, a fiber obtained by melt-spinning is cut and dispersed in water under a gentle agitation to give a uniform slurry for paper production. Then, the slurry is formed to a paper by using a paper machine having at least one among wires or nets such as a cylinder, a fourdrinier and a sloping-type short wire. In the present invention, the obtained paper is, for example, dried at a temperature of about 80 to 200°C, preferably about 100 to 180°C and more preferably about 110 to 150°C to express the adhesivity of the binder fiber, and temporarily adhered. Incidentally, in the paper production, the cut fiber may be prepared as a slurry for paper production after subjecting the fiber to a beating or refining treatment with the use of a beater, a refiner or other means. Moreover, an additive such as a gum or a dispersing agent may be added to the cut fiber in the paper production.

The obtained wet-laid nonwoven fabric is preferably subjected to a hydrophilic treatment for improving the affinity of the separator to the electrolyte. As the hydrophilic treatment, a corona discharge treatment, a plasma treatment, a fluorination treatment, a treatment with fuming sulfuric acid, a treatment with a surfactant, and others may be used.

Further, in order to adjust the thickness of the separator or impart the adhesiveness of the binder fiber with heat, the wet-laid nonwoven fabric is suitably subjected to a heat-calender treatment by using a combined roller such as rubber-rubber, steal-steal, steal-rubber, cotton-steal or cotton-cotton. The heat-calender treatment may be carried out before the hydrophilic treatment or after the hydrophilic treatment. The roller temperature in the heat-calender treatment is, for example, about 150 to 300°C. preferably about 180 to 250°C and more preferably about 200 to 240°C. Incidentally, as usage, in the case where the wet-laid nonwoven fabric sufficiently expresses adhesivity by only drying, it is unnecessary to conduct such a heat-calender treatment (finishing (or full) adhesion).

INDUSTRIAL APPLICABILITY

Since the binder fiber of the present invention is high in adhesivity and excellent in various resistance characteristics as mentioned above, the binder fiber is excellent as a binder fiber for a battery separator, and in addition, a binder component used in various electrochemical device separators, various chemical filters for liquids, insulating papers, or fiber sheets used for carrier belts. Further, the binder fiber is effective in retaining the shape of a fiber aggregate such as cushin.

Incidentally, the binder fiber of the present invention may be also used for the application in which temporary adhesivity is not required. Such an application may include, for example, use of the binder fiber of the present invention as a binder component for a dry-laid nonwoven fabric.

EXAMPLES

The following examples are intended to describe this invention in further detail and should by no means be interpreted as defining the scope of the invention. Incidentally, "part(s)" and "%" in the examples indicate the proportion by weight unless otherwise stated. Moreover, concerning an alkaline battery separator, each of characteristics and performances was measured in accordance with the following measuring method.

[Limiting viscosity number of polyamide resin]

A polyamide was dissolved in a concentrated sulfuric acid to prepare sample solutions each having concentrations of 0.05, 0.1, 0.2 or 0.4 dl/g, and an inherent viscosity ($\eta$inh) thereof at 30°C was determined. The inherent viscosity was extrapolated to zero to give a limiting viscosity number [$\eta$].

[End-capping rate of polyamide resin]

The end-capping rate can be determined based on the following formula (1). In this case, the total number "A" of the end group of the molecular chain can be calculated from the following formula (2). Further, by titration, the number of the end carboxyl group of the polyamide (eq/g) [a solution of the polyamide in benzyl alcohol was titrated with 0.1N sodium hydroxide] and the number of the end amino group of the polyamide (eq/g) [a solution of the polyamide in phenol was titrated with 0.1N hydrochloric acid] can be measured to give the total number "B" of the end carboxyl group and the end amino group.

$$\text{End-capping rate (\%)} = [(A-B) \div A] \times 100 \qquad (1)$$

[In the formula, "A" represents the total number of the end group of the molecular chain (the number is usually equal to twice as large as the number of the polyamide molecule), and "B" represents the total number of the end carboxyl group and the end amino group]

(Calculation method of total number "A" of end group of molecule)

$$A \; (eq/g) = 2/Mn \qquad (2)$$

[Mn = 21900 x [η] - 7900 ([η]: the limiting viscosity number of the polyamide, Mn: the number average molecular weight)]

[Melting point and melting heat quantity (melting peak enthalpy) of polyamide resin]

With the use of a differential scanning calorimeter DSC (manufactured by Mettler Toledo, TA-3000), a polyamide fiber was completely melted, and then immediately cooled to a room temperature. The polyamide fiber (sample amount: 10 mg) was heated from 30°C to 350°C at a heating rate of 10°C/minute under nitrogen purge, and an endothermic peak value due to melting near 250 to 300°C was read as a melting point, and a peak area thereof was read as a melting heat quantity.

[Crystallization temperature of polyamide fiber]

With the use of a differential scanning calorimeter DSC (manufactured by Mettler Toledo, TA-3000), a polyamide fiber (sample amount: 10 mg) was heated from 30°C to 350°C at a heating rate of 10°C/minute under nitrogen purge, and an exothermic peak value near 100 to 200°C was read as a crystallization peak temperature (Tch).

[Fabric weight ($g/m^2$)]

The fabric weight was measured in accordance with JIS P 8124.

[Thickness ($\mu$m)]

The thickness was measured in accordance with JIS P 8118.

[Tensile strength (kN/m)]

The tensile strength was measured in accordance with JIS P 8113.

[Breaking length (km)]

The breaking length was measured in accordance with JIS P 8113.

[Temporary adhesivity]

In a wet paper production process, a sheet was dried at 130°C by using a Yankee dryer, and the breaking length of the resulting sheet was measured in accordance with JIS P 8113.

[Pore size ($\mu$m)]

Concerning the pore size, the maximum pore size and the mean pore size were measured by using a "Perm-Porometer CFP-1100AEXL" manufactured by Porous Materials Inc.

[Heat resistance (%)]

The shape retention of a separator after being immersed at 140°C or 180°C for 30 minutes in a KOH aqueous solution having a concentration of 30%, and the weight retention (%) and the strength retention (%) before and after the immersion were investigated and used as evaluation indices of the heat resistance in an alkali solution. The shape retention was judged as follows. The sheets which were judged as "A" or "B" were determined about the weight retention and the strength retention. Incidentally, the strength retention was measured in accordance with JIS P 8113.
"A" : The appearance of the separator is not changed.
"B": While the separator retains the shape as a separator, part thereof almost lost the shape due to ravel.
"C": The fibers constituting the separator are dissolved, decomposed or melted, and as a result the separator does not retain the shape.

[Oxidation resistance (%)]

The shape retention, the weight retention (%) and the strength retention (%) of a separator after being treated with a mixed aqueous solution of $KMnO_4$ and KOH were investigated and used as evaluation indices of the oxidation resistance in an alkali solution. As the treatment solution, a mixed aqueous solution of a $KMnO_4$ aqueous solution (250ml) with a concentration of 5% and a KOH aqueous solution (50ml) with a concentration of 30% was used. The separator was immersed in the treatment solution at 50°C and 80°C for 1 hour and picked up. The picked up sample was washed with water up to a point of neutralization and dried. Then, the strength retention was calculated based on the tensile strength (strength) of the separator determined in accordance with JIS P 8113. The shape retention was evaluated in the same way as the heat resistance.

[Incision strength resistance ($mN \cdot m^2/g$)]

For the evaluation of the incision strength resistance, a stainless-steel fixture (a flat-blade knife having a width of 8 mm) attached to a handy compression tester "KES-G5" manufactured by KES Kato tech Co., Ltd. was thrust vertically into a separator sample at a rate of 0.2 mm/second. A force necessary to cut the sample was measured and the resulting value was divided by the fabric weight to calculate a strength.

[Electrolyte retention capability (g/g)]

A separator sample having 50 mm x 50 mm was immersed in a KOH aqueous solution having a concentration of 35% for 30 minutes under a bath ratio condition of 1/100, and drained spontaneously for 30 seconds. Then, the weight of the separator sample was measured. The weight of the retained KOH aqueous solution having a concentration of 35% in the separator was divided by the original weight of the separator sample to calculate an electrolyte retention amount.

[Liquids-absorbing rate (second)]

The end of the separator sample was immersed in a KOH aqueous solution having a concentration of 35% to measure a time required for absorbing the KOH aqueous solution up to a height of 25 mm.

Hereinafter, the details and abbreviation of polyamide fibers used in Examples, Comparative Examples or Reference are as follows.

[Polyamide fiber A1]

Terephthalic acid (100% by mole) as a dicarboxylic acid component, 1,9-nonanediamine (50% by mole) and 2-methyl-1,8-octanediamine (50% by mole) as a diamine component, and benzoic acid were synthesized to give a semi-aromatic polyamide PA9M-T end-capped with benzoic acid (limiting viscosity number: 0.73dl/g, end-capping rate: 91%). The polyamide was subjected to a melt-spinning method to give a drawn polyamide fiber yarn having a fineness of 0.7 dtex. The yarn was cut into 10 mm length and used as a material for a wet-laid nonwoven fabric.

[Polyamide fiber A2]

A sea-island structure fiber was produced from the semi-aromatic polyamide PA9M-T used in the polyamide fiber A1 as an island, component and a polyester readily soluble in an alkali, which was a copolymer of 5-sodium sulfoisophthalate and a polyethylene glycol as a sea component. The sea-island structure fiber was melt-spun and dissolved in an alkali to remove the sea component completely, and a drawn polyamide fiber yarn having a fineness of 0.08 dtex was obtained. The yarn was cut into 3 mm length and used as a material for a wet-laid nonwoven fabric.

[Polyamide fiber A3]

In the same manner as the polyamide fiber Al, a semi-aromatic polyamide PA9M-T was synthesized (limiting viscosity numbers 0.85dl/g, end-capping rate: 89%), and subjected to a melt-spinning method to give a drawn polyamide fiber yarn having a fineness of 1.7 dtex. The yarn was crimped, cut into 38 mm length and used as a material for a dry-laid nonwoven fabric.

[Binder fibers B1, B2]

A terephthalic acid unit (80% by mole) and an isophthalic acid unit (20% by mole) as a dicarboxylic acid unit, a 1,6-hexanediamine unit (20% by mole), a 1,9-nonanediamine unit (40% by mole) and a 2-methyl-1,8-octanediamine unit (40% by mole) as a diamine unit, and benzoic acid as an end-blocking agent was used to synthesize a semi-aromatic polyamide PA69M-IT (limiting viscosity number: 0.75 dl/g, end-capping rate: 80%). The polyamide was subjected to a melt-spinning method to give an undrawn polyamide yarn having a fineness of 2 dtex (binder fiber B1, Tch: 168°C) and a drawn polyamide yarn having a fineness of 0.5 dtex (binder fiber B2, Tch: not appeared). These fibers were cut into 10 mm length and used as a material for a wet-laid nonwoven fabric, respectively.

[Binder fibers B3, B4]

An amorphous polyamide PA6-IT (manufactured by Du Pont-Mitsui Polychemicals Co., Ltd., SELAR PA3426) which comprised a terephthalic acid unit (40% by mole) and an isophthalic acid unit (60% by mole) as a dicarboxylic acid unit and a 1,6-hexanediamine unit as a diamine unit, and the semi-aromatic polyamide PA9M-T used in the polyamide fiber A1 were dry-blended in a proportion of 40% by weight/60% by weight (polyamide PA6-IT/polyamide PA9M-T). Then, the dry-blended product was melt-kneaded at 300°C for 10 minutes, and subjected to a melt-splnning method to give an undrawn yarn having a fineness of 2.2 dtex (binder fiber B3, Tch: 170°C) and a drawn yarn having a fineness of 0.7 dtex (binder fiber B4, Tch: not appeared). These fibers were cut into 10 mm length and used as a material for a wet-laid nonwoven fabric, respectively. Incidentally, in each of these fibers, an exchange reaction between the PA6-IT and the PA9M-T was confirmed by measuring the crystal, peak temperature and the peak area.

[Binder fibers B5, B6]

The semi-aromatic polyamide-blended product which was melt-kneaded in the binder fiber B3 (crystal melting heat quantity: 25 J/g) as a sheath component and the semi-aromatic polyamide PA9M-T used in the polyamide fiber A1 (crystal melting heat quantity: 53 J/g) as a core component were subjected to a melt-spinning method, in a weight ratio of the core component relative to the sheath component of 50/50 to give an undrawn sheath-core structure conjugated fiber yarn having a fineness of 2.2 dtex (binder fiber B5, Tch of sheath component: 169°C) and a drawn sheath-core structure conjugated fiber yarn having a fineness of 1.7 dtex (binder fiber B6, Tch of sheath, component: not appeared). These fibers were cut into 10 mm length and used as a material for a wet-laid nonwoven fabric, respectively. Also in each of these fibers, an exchange reaction between the PA6-IT constituting the sheath component and the PA9M-T was confirmed by measuring the crystal peak temperature and the peak area.

[Binder fiber B7]

The drawn yarn of the binder fiber B6 was crimped, and then cut into 38 mm length, and used as a material for a dry-laid nonwoven fabric.

[Binder fiber B8]

In the same manner as the binder fiber B5 except for using the PA69M-IT employed in the binder fiber B1 as the sheath component, an undrawn sheath-core structure binder fiber with 2.9 dtex was produced. The fiber was cut into 10 mm length to give a binder fiber B8 (Tch: 165°C) as a material for a wet-laid nonwoven fabric.

[Binder fiber B9]

A terephthalic acid unit (80% by mole) and an isophthalic acid unit (20% by mole) as a dicarboxylic acid unit, a 2,2,4-trimethylhexanediamine unit (20% by mole), a 1,9-nonanediamine unit (40% by mole) and a 2-methyl-1,8-octanediamine unit (40% by mole) as a diamine unit, and benzoic acid as an end-blocking agent, were used to give a semi-aromatic polyamide (limiting viscosity number: 0,73dl/g, end-capping rate: 80%). In the same manner as the binder fiber B5 except for using the semi-aromatic polyamide as the sheath component, an undrawn sheath-core structure binder fiber with 2.9 dtex was produced. The fiber was cut into 10 mm length to give a binder fiber B9 (Tch: 168°C) as a material for a wet-laid nonwoven fabric.

[Binder fiber B10]

A terephthalic acid unit (80% by mole) and an isophthalic acid unit (20% by mole) as a dicarboxylic acid unit,

19

a 2,4,4-trimethylhexanediamine unit (20% by mole), a 1,9-nonanediamine unit (40% by mole) and a 2-methyl-1,8-octanediamine unit (40% by mole) as diamine unit, and benzoic acid as an end-blocking agent were used to give a semi-aromatic polyamide (limiting viscosity number: 0.71dl/g, end-capping rate: 80%). In the same manner as the binder fiber B5 except for using the semi-aromatic polyamide as the sheath component, an undrawn sheath-core structure binder fiber with 2.9 dtex was produced. The fiber was cut into 10 mm length to give a binder fiber B10 (Tch: 169°C) as a material for a wet-laid nonwoven fabric.

[Binder fiber B11]

In the same manner as the binder fiber B5 except for using 2,2,4-trimethylhexanediamine instead of 1,6-hexanediamine in the PA6-IT used as part of the sheath component, an undrawn sheath-core structure binder fiber with 2.9 dtex was produced. The fiber was cut into 10 mm length to give a binder fiber B11 (Tch: 166°C) as a material for a wet-laid nonwoven fabric. Also in the fiber, an exchange reaction between the polyamides constituting the sheath component was confirmed by measuring the crystal peak temperature and the peak area.

[Binder fiber B12]

In the same manner as the binder fiber B5 except for using 2,4,4-trimethylhexanediamine instead of 1,6-hexanediamlne in the PA6-IT used as part of the sheath component, an undrawn sheath-core structure binder fiber with 2.9 dtex was produced. The fiber was cut into 10 mm length to give a binder fiber B12 (Tch: 167°C) as a material for a wet-laid nonwoven fabric. Also in the fiber, an exchange reaction between the polyamides constituting the sheath component was confirmed by measuring the crystal peak temperature and the peak area.

[Binder fiber B13]

In the same manner as the binder fiber B5 except for using isophthalic acid (100% by mole) instead of the dicarboxylic acid component of the PA6-IT used as part of the sheath component, an undrawn sheath-core structure binder fiber with 2.9 dtex was produced. The fiber was cut into 10 mm length to give a binder fiber B13 (Tch: 177°C) as a material for a wet-laid nonwoven fabric. Also in the fiber, an exchange reaction between the polyamides constituting the sheath component was confirmed by measuring the crystal peak temperature and the peak area.

[Binder fiber B14]

In the same manner as the binder fiber B5 except that the blending ratio of the PA6-IT relative to the PA9MT in the sheath component was changed to a weight ratio of 30/70, an undrawn sheath-core, structure binder fiber with 2.9 dtex was produced. The fiber was cut into 10 mm length to give a binder fiber B14 (Tch: 166°C) as a material for a wet-laid nonwoven fabric. Also in the fiber, an exchange reaction between the polyamides constituting the sheath component was confirmed by measuring the crystal peak temperature and the peak area.

[Binder fibers B15, B16]

In the same manner as the binder fiber B5 except that the blending ratio of the PA6-IT relative to the PA9MT in the sheath component was changed to a weight ratio of 50/50, two types of undrawn sheath-core structure binder fibers with 2.9 dtex and 1.5 dtex, respectively, were produced. These fibers were cut into 10 mm length, respectively, to give a binder fiber B15 (2.9 dtex, Tch: 180°C) and a binder fiber B16 (1.5 dtex, Tch: 183°C) which were used as a material for a wet-laid nonwoven fabric. Also in these fibers, an exchange reaction between the polyamides constituting the sheath component was confirmed by measuring the crystal peak temperature and the peak area.

Examples 1 to 6

The polyamide fiber A1 (60 parts) and any one of the binder fibers B1 to B6 (40 parts) were mixed together. The mixture was disaggregated in water by using a pulper and gently agitated in a chest to prepare a uniform slurry for paper production. The slurry was formed into a paper by a sloping-type short wire paper machine in a wet paper production process, and dried at 140°C by a Yankee dryer to give a wet-laid nonwoven fabric. Then, the nonwoven fabric was subjected to a heat-calender treatment at a roller temperature of 200°C, and finally the both sides of the nonwoven fabric were applied to a corona treatment at a discharge amount of 2600 (W·min/m$^2$) to give an alkaline battery separator.

Example 7

The polyamide fiber A3 (70 parts) and the binder fiber B7 (30 parts) were blended, formed into a web by a roller card, and continuously subjected to an entangling treatment at a water flow of 5 MPa. Then, in the same manner as Example 1, the resulting nonwoven fabric was subjected to a heat-calender treatment at a roller temperature of 200°C, and finally the both sides of the nonwoven fabric were applied to a corona treatment at a discharge amount of 2600 (W·min/m$^2$) to give an alkaline battery separator.

Comparative Example 1

A polyamide dry-laid nonwoven fabric (manufactured by Japan Vilene Company, Ltd., card type, basis weight: 63.5 g/m$^2$, thickness: 150 $\mu$m) comprising a polyamide 6 (referred to as "PA6" in Table 1) andapolyamide66 (referred to as "PA66" in Table 1) was used as an alkaline battery separator.

Comparative Example 2

Seventy parts of a crystalline polypropylene fiber (manufactured by Daiwabo Co., Ltd., PZ, fineness: 0.8 dtex, fiber length: 10 mm, referred to as "PP" in Table 1) as a main fiber and 30 parts of a polyethylene/polypropylene sheath-core structure conjugated fiber (manufactured by Daiwabo Co., Ltd., NBF-H, fineness: 1.7 dtex, fiber length: 5 mm, referred to as "PE/PP" in Table 1) as a binder fiber were mixed together. The mixture was disaggregated in water by using a pulper and gently agitated in a chest to prepare a uniform slurry for paper production. In exactly the same manner as Example 1 except for using the slurry, an alkaline battery separator was obtained.

Comparative Example 3

In exactly the same manner as Example 1 except for using an undrawn yarn of the polyamide fiber A1 (1.7 dtex, fiber length: 10 mm, referred to as "UDY" in Table 1) instead of the binder fiber B1 in Example 1, an alkaline battery separator was obtained.

Example 8

The polyamide fiber A1 (57.5 parts), the binder fiber B5 (40 parts) and a polyparaphenylenebenzobisoxazole fiber (manufactured by Toyobo Co., Ltd., Zylon, tensile strength: 37 cN/dtex, fineness: 1.7 dtex, fiber length: 6 mm) (2.5 parts) were mixed together. The mixture was disaggregated in water by using a pulper and gently agitated in a chest to prepare a uniform slurry for paper production. In exactly the same manner as Example 1 except for using the slurry, an alkaline battery separator was obtained.

Example 9

The polyamide fiber A1 (47.5 parts), the polyamide fiber A2 (10 parts), the binder fiber B5 (40 parts) and the polyparaphenylenebensobisoxazole fiber (2.5 parts) were mixed together. The mixture was disaggregated in water by a pulper and gently agitated in a chest to prepare a uniform slurry for paper production. In exactly the same manner as Example 1 except for using the slurry, an alkaline battery separator was obtained.

Example 10

The polyamide fiber A2 (70 parts) and the binder fiber B5 (30 parts) were mixed together. The mixture was disaggregated in water by using a pulper and gently agitated in a chest to prepare a uniform slurry for paper production. In exactly the same manner as Example 1 except for using the slurry, an alkaline battery separator was obtained.

Example 11

The polyamide fiber A1 (47.5 parts), the polyamide fiber A2 (10 parts), the binder fiber B5 (30 parts), an extremely ultra-fine fiber of an ethylene-vinyl alcohol copolymer (ethylene content 44% by mole, fiber diameter: 0.08 dtex, fiber length: 3 mm, referred to as "EVOH" in Table 3) (10 parts), and the polyparaphenylenebenzobisoxazole fiber (2.5 parts) were mixed together. The mixture was disaggregated in water by using a pulper and gently agitated in a chest to prepare a uniform slurry for paper production. In exactly the same manner as Example 1 except for using the slurry, an alkaline battery separator was obtained.

Comparative Example 4

A polyamide 66 fiber (fineness: 0.5 dtex, fiber length: 10 mm, referred to as "PA66" in Table 3) (57.5 parts) as a main fiber, a polyamide 6/polyamide 66 sheath-core structure conjugated fiber (fineness: 2.2 dtex, fiber length: 10 mm, referred to as "PA6/PA66" in Table 3) (40 parts) as a binder fiber, and a polyparaphenylenebenzobisoxazole fiber (manufactured by Toyobo Co., Ltd., Zylon, tensile strength: 37 cN/dtex, fineness: 1.7 dtex, fiber length: 6 mm) (2.5 parts) as a reinforcing fiber were mixed together. The mixture was disaggregated in water by using a pulper and gently agitated in a chest to prepare a uniform slurry for paper production. In exactly the same manner as Example 1 except for using the slurry, an alkaline battery separator was obtained.

Examples 12 to 13

In the same manner as Example 9 except for changing the binder fiber into the binder fiber B15 or B16, separators were produced.

The attributes of the alkaline battery separators obtained in Examples and Comparative Examples are shown in Table 1 and Table 3.

Incidentally, in these Examples and Comparative Examples, the observation of the separator under a microscope revealed that the binder fiber was melted in at least a surface part thereof to adhere and fix to a fiber constituting the sheet. Moreover, in Examples 1 to 13, only by producing a paper with water and drying the paper with the Yankee dryer, all nonwoven fabric had a breaking length of not less than 0.3 km. Some of these fabrics had a breaking length over 1 km. Therefore, separator papers excellent in the process passability could be easily produced without any problems in the paper production process after the drying. On the contrary, the nonwoven fabric of Comparative Example. 3 had an extremely low temporary adhesivity after drying with the Yankee dryer compared to the nonwoven fabrics of Examples, and there were some troubles such as broken paper in the transition from the drying process to the next process.

[Table 1]

Table 1

| | Examples | | | | | | | Comparative Examples | | |
|---|---|---|---|---|---|---|---|---|---|---|
| | 1 | 2 | 3 | 4 | 5 | 6 | 7 | 1 | 2 | 3 |
| Main fiber | A1 | A1 | A1 | A1 | A1 | A1 | A3 | PA66 | PP | A1 |
| Binder fiber | B1 | B2 | B3 | B4 | B5 | B6 | B7 | PA6 | PE/PP | UDY |
| Fabric weight (g/m$^2$) | 68.1 | 65.2 | 67.7 | 64.3 | 68.9 | 64.9 | 65.1 | 63.5 | 66.9 | 64.5 |
| Thickness ($\mu$m) | 162 | 158 | 160 | 155 | 163 | 159 | 156 | 150 | 161 | 159 |
| Tensile strength (kN/m) | 3.43 | 3.37 | 3.82 | 4.06 | 3.98 | 4.14 | 5.25 | 3.67 | 3.53 | 1.55 |
| Breaking length (km) | 5.13 | 5.26 | 5.75 | 6.44 | 5.89 | 6.5 | 8.22 | 5.89 | 5.38 | 2.45 |
| Mean pore size ($\mu$m) | 25.1 | 20.3 | 25.9 | 22.0 | 26.1 | 24.4 | 39.8 | 42.8 | 28.9 | 27.6 |
| Maximum pore size | 39.8 | 32.6 | 41.3 | 35.5 | 48.2 | 42.2 | 72.1 | 75.5 | 53.6 | 45.3 |
| Incision strength resistance (mN·m$^2$/g) | 74.5 | 79 | 77.1 | 81.3 | 78.2 | 88.5 | 90.1 | 69 | 48.5 | 97.1 |
| Electrolyte retention amount (g/g) | 2.29 | 2.4 | 2.16 | 2.35 | 2.36 | 2.41 | 2.51 | 2.32 | 1.67 | 2.25 |
| Liquid-absorbing rate (sec) | 104 | 87 | 98 | 73 | 85 | 70 | 85 | 82 | 345 | 97 |

[Table 2]

Table 2

| | | | Examples | | | | | | | Comparative Examples | | |
|---|---|---|---|---|---|---|---|---|---|---|---|---|
| | | | 1 | 2 | 3 | 4 | 5 | 6 | 7 | 1 | 2 | 3 |
| Heat resistance | Shape retention | 140°C | A | A | A | A | A | A | A | A | A | A |
| | | 180°C | A | A | A | A | A | A | A | - | C | A |
| | Weight retention (%) | 140°C | 98 | 99 | 99 | 99 | 98 | 99 | 99 | 98 | 100 | 100 |
| | | 180°C | 91 | 92 | 92 | 92 | 95 | 96 | 97 | 85 | - | 96 |
| | Strength retention (%) | 140°C | 92 | 93 | 98 | 97 | 99 | 98 | 97 | 73 | 88 | 88 |
| | | 180°C | 31 | 30 | 33 | 36 | 41 | 40 | 42 | - | - | 12 |
| Oxidation resistance | Shape retention | 50°C | A | A | A | A | A | A | A | B | A | A |
| | | 80°C | B | B | B | B | B | B | B | C | A | A |
| | Weight retention(%) | 50°C | 99 | 98 | 99 | 99 | 99 | 98 | 99 | 98 | 99 | 99 |
| | | 80°C | 78 | 79 | 82 | 81 | 91 | 85 | 86 | - | 92 | 91 |
| | Strength retention (%) | 50°C | 99 | 99 | 98 | 98 | 99 | 99 | 99 | 0 | 99 | 99 |
| | | 80°C | 2 | 2 | 3 | 3 | 6 | 6 | 7 | - | 45 | 10 |

[Table 3]

Table 3

| | Example 8 | Example 9 | Example 10 | Example 11 | Comparative Example 4 | Example 12 | Example 13 |
|---|---|---|---|---|---|---|---|
| Main fiber | A1 | A1 | - | A1 | PA66 | A1 | A1 |
| Binder fiber | B5 | B5 | B5 | B5+EVOH | PA6/PA66 | B15 | B16 |
| Filling fiber | - | A2 | A2 | A2 | - | A2 | A2 |
| Reinforcing fiber | present | present | - | present | present | present | present |
| Fabric weight (g/m$^2$) | 70.9 | 69.2 | 38.4 | 66.3 | 68.4 | 71.3 | 72.8 |
| Thickness (μm) | 155 | 164 | 85 | 160 | 164 | 166 | 158 |
| Tensile strength (kN/m) | 4.67 | 4.92 | 1.64 | 5.08 | 1.86 | 5.22 | 5.48 |
| Breaking length (km) | 6.71 | 7.25 | 4.35 | 7.81 | 2.77 | 7.46 | 7.67 |
| Mean pore size (μm) | 24.5 | 15.5 | 16.1 | 18.3 | 35.7 | 14.1 | 13.4 |
| Maximum pore sise (μm) | 46.6 | 40.0 | 27.9 | 30.3 | 82.7 | 33.6 | 30.3 |
| Incision strength resistance (mN·m$^2$/g) | 167 | 154 | 124 | 148 | 159 | 158 | 159 |

(continued)

| | Example 8 | Example 9 | Example 10 | Example 11 | Comparative Example 4 | Example 12 | Example 13 |
|---|---|---|---|---|---|---|---|
| Electrolyte retention amount (g/g) | 2.44 | 2.51 | 2.57 | 2.39 | 2.12 | 2.43 | 2.39 |
| Liquid-absorbing rate (sec) | 50.8 | 47.9 | 22.3 | 36.5 | 63.9 | 33.2 | 26.5 |

[Table 4]

Table 4

| | | | Example 8 | Example 9 | Example 10 | Example 11 | Comparative Example 4 | Example 12 | Example 13 |
|---|---|---|---|---|---|---|---|---|---|
| Heat resistance | Shape retention | 140°C | A | A | A | A | A | A | A |
| | | 180°C | A | A | A | A | B | A | A |
| | Weight retention (%) | 140°C 180°C | 98 94 | 99 93 | 99 94 | 99 95 | 98 82 | 98 91 | 99 93 |
| | Strength retention (%) | 140°C 180°C | 98 50 | 99 48 | 99 51 | 98 38 | 75 3 | 94 29 | 93 28 |
| Oxidation resistance. | Shape retention | 50°C | A | A | A | A | B | A | A |
| | | 80°C | B | B | B | B | C | B | B |
| | Weight retention (%) | 50°C 80°C | 99 84 | 98 85 | 99 82 | 99 81 | 97 - | 99 93 | 98 94 |
| | Strength retention (%) | 50°C | 99 | 99 | 98 | 99 | 0 | 98 | 99 |
| | | 80°C | 8 | 7 | 6 | 6 | - | | 2 3 |

(Evaluation)

The evaluation results are shown in Table 2 and Table 4. Since the battery separators of Examples 1 to 13 contain the binder fiber (A) or binder fiber (B) of the present invention, these separators are excellent in heat resistance, oxidation resistance and alkali resistance. On the contrary, the separators of Comparative Examples lower any of heat resistance, oxidation resistance and alkali resistance.

Specifically, the separators of Examples 1 to 7 are excellent in heat resistance, oxidation resistance and alkali resistance. In particular, since the separators of Examples 8 and 9 use the polyparaphenylenebenzobisoxazole fiber excellent in incision strength resistance, these separators are excellent in mechanical properties typified by heat resistance, oxidation resistance and incision strength resistance. Moreover, the separators of Examples 9 and 10 containing the extremely ultra-fine fiber of the polyamide fiber have a small pore size and are also excellent in dendrite durability. The separator of Example 11 further containing the extremely ultra-fine fiber of the ethylene-vinyl alcohol copolymer as the binder fiber is high in tensile strength, and has a sufficient tensile strength to stand the tension of an automatic apparatus for winding groups in the battery production even when the tension is high. The separators of Examples 12 and 13 are highly preferred examples of the present invention. As apparent from the results, highly excellent separators were obtained.

On the other hand, although the separator of Comparative Example 1 comprising the aliphatic polyamide fiber is excellent in heat resistance, the separator is low in oxidation resistance. Moreover, the separator is a dry-laid nonwoven fabric, the pore size is large and the short-circuit resistance is deteriorated. Although the separator of Comparative Example 2 comprising the polyolefinic fiber is excellent in oxidation resistance, the separator is low in heat resistance, electrolyte retention capability and liquid-absorbing rate. Each fiber constituting the separator of Comparative Example 3 is excellent in heat resistance and resistance to oxidization and degradation. However, the separator is low in strength due to the low adhesiveness of the binder fiber. Although the separator of Comparative Example 4 containing the polyparaphenylenebenzobisoxazole fiber is excellent in incision strength resistance, the separator is inferior in heat resistance and oxidation resistance because of use of the fiber comprising the polyamide 6 and the polyamide 66 as a fiber constituting the separator.

Examples 14 to 22

The polyamide fiber A1 (60 parts) and any one of the binder fibers B8 to B16 (40 parts) were mixed together. The mixture was disaggregated in water by using a pulper and gently agitated in a chest to prepare a uniform slurry for paper production. The slurry was formed into a paper by a sloping-type short wire paper machine in a wet paper production process, and dried at 140°C by a Yankee dryer to give a wet-laid nonwoven fabric. Then, the nonwoven fabric was subjected to a heat-calender treatment at a roller temperature of 200°C, and finally the both sides of the nonwoven fabric were applied to a corona treatment at a discharge amount of 2600 (W·min/m$^2$) to give an alkaline battery separator. The performances of thus obtained battery separators are shown in Tables 5 to 6.

[Table 5]

Table 5

| | Examples | | | | | | | | |
|---|---|---|---|---|---|---|---|---|---|
| | 14 | 15 | 16 | 17 | 18 | 19 | 20 | 21 | 22 |
| Main fiber | A1 | A1 | A1 | A1 | A1 | A1 | A1 | A1 | A1 |
| Binder fiber | B8 | B9 | B10 | B11 | B12 | B13 | B14 | B15 | B16 |
| Fabric weight(g/m$^2$) | 65.5 | 63.4 | 64.5 | 64.6 | 67.1 | 66.1 | 65.6 | 64.8 | 67.1 |
| Thickness ($\mu$m) | 151 | 148 | 149 | 152 | 155 | 154 | 152 | 151 | 157 |
| Tensile strength (kN/m) | 3.11 | 3.41 | 3.55 | 3.2 | 3.61 | 3.79 | 3.23 | 4.78 | 5.33 |
| Breaking length, (km) | 4.84 | 5.49 | 5.62 | 5.05 | 5.49 | 5.85 | 5.02 | 6.53 | 7.11 |
| Mean pore size ($\mu$m) | 27.3 | 28.1 | 29.4 | 27.9 | 26.6 | 20.5 | 32.1 | 23.8 | 21.4 |
| Maximum pore size ($\mu$m) | 47.1 | 48.8 | 49.1 | 47.6 | 46.6 | 44.4 | 53.1 | 41.6 | 39.5 |
| Incision strength resistance (mN·m$^2$/g) | 77.6 | 80.1 | 83.4 | 81.2 | 81.9 | 88.2 | 84.5 | 134 | 141 |
| Electrolyte retention amount (g/g) | 2.41 | 2.51 | 2.38 | 2.48 | 2.54 | 2.58 | 2.3 | 2.49 | 2.91 |
| Liquid-absorbing rate (sec) | 103 | 86 | 92 | 73 | 81 | 78 | 67 | 51 | 30 |

[Table 6]

Table 6

| | | | Examples | | | | | | | | |
|---|---|---|---|---|---|---|---|---|---|---|---|
| | | | 14 | 15 | 16 | 17 | 18 | 19 | 20 | 21 | 22 |
| Heat resistance | Shape retention | 140°C | A | A | A | A | A | A | A | A | A |
| | | 180°C | A | A | A | A | A | A | A | A | A |
| | Weight retention (%) | 140°C | 98 | 99 | 99 | 99 | 98 | 99 | 98 | 99 | 98 |
| | | 180°C | 92 | 94 | 95 | 92 | 93 | 92 | 91 | 90 | 92 |
| | Strength retention (%) | 140°C | 93 | 94 | 94 | 93 | 94 | 93 | 94 | 93 | 94 |
| | | 180°C | 41 | 38 | 35 | 36 | 43 | 36 | 32 | 28 | 25 |
| Oxidation resistance | Shape retention | 50°C | A | A | A | A | A | A | A | A | A |
| | | 80°C | B | B | B | B | B | B | B | B | B |
| | Weight retention. (%) | 50°C | 99 | 98 | 99 | 98 | 99 | 98 | 99 | 99 | 99 |
| | | 80°C | 97 | 98 | 96 | 94 | 97 | 94 | 95 | 93 | 91 |
| | Strength retention (%) | 50°C | 99 | 97 | 98 | 99 | 98 | 99 | 99 | 98 | 97 |
| | | 80°C | 3 | 2 | 4 | 3 | 4 | 3 | 3 | 2 | 2 |

From the results shown in Tables 5 and 6, it is proved that all of the battery separators comprising the binder fiber of the present invention are excellent in heat resistance, oxidation resistance and alkali resistance, additionally excellent in strength, electrolyte retention capability and liquid-absorbing property. Moreover, in these Examples, the observation of the separator under a microscope revealed that the binder fiber was melted in at least a surface part thereof to adhere and fix to a fiber constituting the sheet. Moreover, in these Examples, only by forming the fiber component into a paper with the, water dispersion and drying the paper with the Yankee dryer, the temporary adhesivity was significantly generated, and separator papers excellent in the process passability could be easily produced without any problems in the paper production process after the drying. Further, since the separators of these Examples are excellent in electrolyte leakage resistance and high rate discharge characteristics, such separators are preferably usable as a separator for an alkaline battery in which large current discharge and high capacitance are required.

**Claims**

1. A binder fiber comprising a polyamide component in at least part of a surface of the fiber, wherein the polyamide component contains a semi-aromatic polyamide at least having
an aromatic ring unit and
a $C_{3-7}$alkane unit which may have a $C_{1-3}$alkyl group as a branched chain.

2. A binder fiber according to claim 1, wherein the polyamide component comprises (a) a semi-aromatic copolyamide having an aromatic ring unit, a $C_{3-7}$alkane unit which may have a $C_{1-3}$alkyl group as a branched chain, and a $C_{8-12}$alkane unit which may have a $C_{1-3}$alkyl group as a branched chain.

3. A binder fiber according to claim 2, wherein the semi-aromatic copolyamide (a) is a semi-aromatic copolyamide having
a dicarboxylic acid unit containing an aromatic dicarboxylic acid unit in a proportion of not less than 60% by mole relative to the total dicarboxylic acid unit, and
a diamine unit containing a $C_{4-7}$alkanediamine unit which may have methyl group as a branched chain and a $C_{8-10}$alkanediamine unit which may have methyl group as a branched chain, wherein the total proportion of the $C_{4-7}$alkanediamine unit and the $C_{8-10}$alkanediamine unit is not less than 60% by mole relative to the total diamine unit.

4. A binder fiber according to claim 2, wherein the semi-aromatic copolyamide (a) is a semi-aromatic copolyamide comprising the following dicarboxylic acid unit (1) and the following diamine unit (2):

(1) a dicarboxylic acid unit containing at least one first dicarboxylic acid unit selected from the group consisting of a terephthalic acid unit and an isophthalic acid unit, wherein the proportion of the first dicarboxylic acid unit is not less than 60% by mole relative to the total dicarboxylic acid unit,

(2) a diamine unit containing at least one first diamine unit selected from the group consisting of a 2,2,4-trimethylhexanediamine unit, a 2,4,4-trimethylhexanediamine unit and a 1,6-hexanediamine unit and at least one second diamine unit selected from the group consisting of a 1,9-nonanediamine unit and a 2-methyl-1,8-octanediamine unit, wherein the total proportion of the first diamine unit and the second diamine unit is not less than 60% by mole relative to the total diamine unit.

5.  A binder fiber according to claim 1, wherein the polyamide component comprises (d) a combination of (b) a semi-aromatic polyamide and (c) a semi-aromatic polyamide, wherein
    the semi-aromatic polyamide (b) has an aromatic ring unit and a $C_{3-7}$alkane unit which may have a $C_{1-3}$alkyl group as a branched chain, and
    the semi-aromatic polyamide (c) has an aromatic ring unit and a $C_{8-12}$alkane unit which may have a $C_{1-3}$alkyl group as a branched chain.

6.  A binder fiber according to claim 5, wherein
    the semi-aromatic polyamide (b) is a semi-aromatic polyamide having
    a dicarboxylic acid unit containing an aromatic dicarboxylic acid unit in a proportion of not less than 60% by mole relative to the total dicarboxylic acid unit, and
    a diamine unit containing a $C_{5-7}$alkanediamine unit which may have methyl group as a branched chain, wherein the proportion of the $C_{5-7}$alkanediamine unit is not less than 60% by mole relative to the total diamine unit; and
    the semi-aromatic polyamide (c) is a semi-aromatic polyamide having
    a dicarboxylic acid unit containing an aromatic dicarboxylic acid unit in a proportion of not less than 60% by mole relative to the total dicarboxylic acid unit, and
    a diamine unit containing a $C_{8-10}$alkanediamine unit which may have methyl group as a branched chain, wherein the proportion of the $C_{8-10}$alkanediamine unit is not less than 60% by mole relative to the total diamine unit.

7.  A binder fiber according to claim 5, wherein the semi-aromatic polyamide (b) comprises the dicarboxylic acid unit (1) and the following diamine unit (3), and the semi-aromatic polyamide (c) comprises the following dicarboxylic acid unit (4) and the following diamine unit (5):

    (3) a diamine unit containing at least one first diamine unit selected from the group consisting of a 2,2,4-trimethylhexanediamine unit, a 2,4,4-trimethylhexanediamine unit and a 1,6-hexanediamine unit, wherein the proportion of the first diamine unit is not less than 60% by mole relative to the total diamine unit,

    (4) a dicarboxylic acid unit containing a terephthalic acid unit in a proportion of not less than 60% by mole relative to the total dicarboxylic acid unit,

    (5) a diamine unit containing at least one second diamine unit selected from the group consisting of a 1,9-nonanediamine unit and a 2-methyl-1,8-octanediamine unit, wherein the proportion of the second diamine unit is not less than 60% by mole relative to the total diamine unit.

8.  A binder fiber according to claim 1, which is a sheath-core structure conjugated fiber, and the sheath comprises polyamide component which contains a semi-aromatic polyamide having an aromatic ring unit and a $C_{3-7}$alkane unit which may have a $C_{1-3}$alkyl group as a branched chain.

9.  A binder fiber according to claim 8, wherein the sheath comprises the semi-aromatic polyamide (a), or the combination (d) of the semi-aromatic polyamide (b) and the semi-aromatic polyamide (c), and the core comprises the semi-aromatic polyamide (c).

10. A battery separator comprising a main fiber and a binder fiber recited in claim 1.

11. A battery separator according to claim 10, wherein the main fiber is fixed in the form of a sheet by the semi-aromatic polyamide of the binder fiber as an adhesive.

12. A battery separator according to claim 10, wherein the main fiber comprises a polyamide-series resin.

13. A battery separator according to claim 10, wherein at least the surface of the binder fiber comprises the semi-aromatic polyamide (a), or the combination (d) of the semi-aromatic polyamide (b) and the semi-aromatic polyamide (c); and the main fiber comprises the semi-aromatic polyamide (c).

14. A battery separator according to claim 10, which further contains a high-tenacity fiber having a tensile strength of not less than 12 cN/dtex or a pulp-like material thereof as a reinforcing fiber.

15. A battery separator according to claim 14, wherein the high-tenacity fiber comprises at least one member selected from the group consisting of a polyparaphenylenebenzobisoxazole fiber, a polyparapheyleneterephthalamide fiber and a high-tenacity polyvinyl alcohol-series fiber.

16. A battery separator according to claim 14, wherein
the main fiber comprises a semi-aromatic polyamide synthesized from 1,9-nonanediamine, 2-methyl-1,8-octanediamine and terephthalic acid,
the reinforcing fiber comprises a polyparaphenylenebenzobisoxazole fiber, and
the binder fiber comprises a binder fiber recited in claim 6.

17. A battery separator according to claim 10, which is a wet-laid nonwoven fabric.

18. A battery separator according to claim 10, which satisfies the following requirements (1) to (3):

(1) the breaking length of the separator is not shorter than 3 km,
(2) the separator retains the shape as a separator after being immersed in an alkali at 140°C for 30 minutes, the weight retention of the separator after the immersion is not less than 90% compared with the weight of the separator before the immersion, and the strength retention of the separator after the immersion is not less than 60% compared with the strength of the separator before the immersion,
(3) the separator retains the shape as a separator after being immersed in an alkali containing an oxidant at 50°C for 1 hour, the weight retention of the separator after the immersion is not less than 90% compared with the weight of the separator before the immersion, and the strength retention of the separator is not less than 60% compared with the strength of the separator before the immersion.

19. A battery comprising a separator recited in claim 10.

## INTERNATIONAL SEARCH REPORT

| International application No. |
| --- |
| PCT/JP2005/017073 |

**A. CLASSIFICATION OF SUBJECT MATTER**
*D01F6/80*(2006.01), *D01F6/90*(2006.01), *D01F8/12*(2006.01), *D21H13/26*
(2006.01), *D21H15/10*(2006.01), *H01M2/16*(2006.01)

According to International Patent Classification (IPC) or to both national classification and IPC

**B. FIELDS SEARCHED**

Minimum documentation searched (classification system followed by classification symbols)
*D01F1/00-9/04, D21H11/00-27/42, H01M2/14-2/18*

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2004-221023 A (Mitsubishi Paper Mills Ltd.), 05 August, 2004 (05.08.04), Description; Par. No. [0051] (Family: none) | 1-19 |
| P,A | JP 2004-319261 A (Mitsubishi Paper Mills Ltd.), 11 November, 2004 (11.11.04), Description; Par. Nos. [0031], [0040] (Family: none) | 1-19 |
| A | JP 2004-103459 A (Kuraray Co., Ltd.), 02 April, 2004 (02.04.04), All references & EP 1542295 A1 & WO 2004/25756 A1 & CA 2498670 A & BR 314105 A | 1-19 |

| ☒ Further documents are listed in the continuation of Box C. | ☐ See patent family annex. |
| --- | --- |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 16 January, 2006 (16.01.06) | 24 January, 2006 (24.01.06) |

| Name and mailing address of the ISA/ Japanese Patent Office | Authorized officer |
| --- | --- |
| Facsimile No. | Telephone No. |

Form PCT/ISA/210 (second sheet) (April 2005)

**INTERNATIONAL SEARCH REPORT**

| International application No. |
|---|
| PCT/JP2005/017073 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2002-151041 A  (Kuraray Co., Ltd.), 24 May, 2002 (24.05.02), All references (Family: none) | 1-19 |
| A | JP 2000-17524 A  (Kuraray Co., Ltd.), 18 January, 2000 (18.01.00), All references (Family: none) | 1-19 |

Form PCT/ISA/210 (continuation of second sheet) (April 2005)

**EP 1 795 632 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9259856 A
- JP 2004103459 A
- JP 2001110390 A